# EUROPÄISCHE PATENTANMELDUNG

(11) **EP 4 799 960 A1**
(43) Veröffentlichungstag der Anmeldung: **02.09.2026**
(21) Anmeldenummer: 26161243.6
(22) Anmeldetag: 27.02.2026
(51) Int. Cl.: B65G 9/00, B65G 17/48, B65G 19/02, B65G 17/20, B65G 47/61

(54) **VORRICHTUNG UND TRANSPORTTASCHE ZUM DREHEN, ÖFFNEN, BEFÜLLEN UND ENTLADEN HÄNGEND GEFÖRDERTER TRANSPORTELEMENTE FÜR FÖRDERSYSTEME**

(30) Priorität: 28.02.2025 CH 1972025
(71) Anmelder: FERAG AG, 8340 Hinwil (CH)
(72) Erfinder: FENILE, Roberto, 8340 Hinwil (CH); BEUTLER, Simon, 8340 Hinwil (CH)
(74) Vertreter: Frei Patent Attorneys

(57) **Zusammenfassung**

Eine Fördereinheit (1) zum hängenden Transport von Fördergut in Transportelementen (41) in einem Fördersystem (50), insbesondere einem schienengeführten Fördersystem (50) oder einem Förderkettensystem, umfasst einen an einem Förderelement (1), insbesondere einem Laufwagen (12) oder einem Förderkettenglied, angebrachten Traghaken (18), ein Transportelement (41) in Form einer Transporttasche (30), und ein am Transportelement (41) angebrachten Aufhängehaken (19), wobei der Aufhängehaken im Traghaken (18) hängend gelagert ist. Der Traghaken (18) ist derart ausgestaltet, dass der Aufhängehaken (19) im Traghaken (18) drei stabile Positionen einnehmen kann. Der Aufhängehaken (19) lässt sich um verschiedene Winkel gegenüber den Traghaken drehen, so dass der Aufhängehaken (19) mindestens drei verschiedene stabile Positionen im Traghaken (18) einnehmen kann.

## Beschreibung

Die vorliegende Erfindung bezieht sich auf das Gebiet der Transport- und Fördertechnik. Sie betrifft eine Fördereinheit zum hängenden Transport von Fördergütern mittels Transportelementen, insbesondere Transporttaschen, in einem Fördersystem, insbesondere einem schienengeführten Fördersystem oder einem Förderkettensystem. Sie betrifft weiter ein Fördersystem mit solchen Fördereinheiten, ein Verfahren zum Einbringen von Stückgut in Transportelemente eines Fördersystems bzw. zum Beladen von Fördereinheiten mit Fördergütern, sowie ein Verfahren zum Entladen von Stückgut aus Transportelementen eines Fördersystems bzw. zum Entladen von Fördergütern aus Fördereinheiten. Ferner betrifft die Erfindung auch eine Drehvorrichtung zum Drehen der Transportelemente von Fördereinheiten.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, beispielsweise Kleiderbügel mit daran aufgehängten Kleidungsstücken, oder in entsprechende Transportelemente wie beispielsweise Transporttaschen eingebracht, die wiederum hängend an den Förderelementen gelagert sind.

Hängefördersysteme können als Transportkettenanlagen realisiert sein, bei welchen eine Vielzahl von Förderelementen Glieder einer Kette bilden, die entlang eines Förderweg bewegt wird.

Ebenfalls bekannt sind schwerkraftgeförderte Fördersysteme, bei welchen sich einzelne mit Rädern ausgestattete Förderelemente auf entsprechenden Laufschienen bewegen. Ein Beispiel eines solchen schwerkraftgeförderten, schienengeführten Fördersystems ist aus der WO 2016/030275 A1 der Anmelderin bekannt.

Hängefördersysteme mit Transportelementen sind besonders geeignet für die effiziente Förderung von heterogenen Stückgut-Waren, wie beispielsweise Werkstücken in Produktionsprozessen, Ersatzteilen, Konsumgütern wie Büchern, Kleidern, Schuhen, etc.

So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in leere Transportelemente und Entladen der Waren aus den Transportelementen.

Ein manuelles Befüllen von bereitgestellten leeren Transportelementen wie beispielsweise Transporttaschen erlaubt eine flexible, schonende Handhabung verschiedener Waren, ist jedoch langsam und kostenintensiv.

So ist es aus dem Stand der Technik bekannt, für den Transport von Waren bzw. Artikeln, nachfolgend vereinfacht Fördergüter genannt, Hängefördereinrichtungen mit Fördertaschen einzusetzen.

Die Publikationsschriften DE 10 2004 018569 A1 und US 11465847 B2 beschreiben beispielsweise eine Hängefördereinrichtung mit einer Mehrzahl von zusammenklappbaren Förder- bzw. Sammeltaschen zum Aufnehmen und sortierenden Sammeln von Objekten, insbesondere von Kleidungsstücken. Die Sammeltasche umfasst ein Rahmengestell und einen am Rahmengestell hängenden Taschenbeutel. Die Sammeltasche ist über ein am Rahmengestell angebrachtes Hakenverbindungselement an der Hängefördereinrichtung bzw. an einem Laufwagen aufgehängt.

Der Vorteil von Fördertaschen liegt darin, dass diese faltbar ausgebildet sind. Dadurch lässt sich das Aufnahmefach durch Zusammenfalten komprimieren. Die Fördertaschen erlauben auf diese Weise gegenüber beispielsweise starren Kisten und Behältern eine platzsparende Güterlogistik. So lassen sich leere Fördertaschen mit komprimiertem Aufnahmefach platzsparend lagern oder fördern. Die Aufnahmefächer brauchen erst für den Warentransport oder die Warenlagerung raumeinnehmend expandiert zu werden.

Die EP 2418160 B1 zeigt eine andere Beladestation für in einer Hängeförderanlage transportierte Transporttaschen. Die Transporttaschen weisen einen an einem Förderelement aufgehängten Rahmenbügel auf, an welchem zwei Enden einer flexiblen Stoffbahn befestigt sind und einen Beutel bilden. Unterhalb des Aufhängehakens des Beutels ist eine Druckplatte angeordnet. In der Beladestation ist eine Kufe angeordnet, welche bei der Bewegung einer Transporttasche durch die Beladestation die Druckplatte und damit auch die Transporttasche von einer Orientierung quer zur Förderrichtung in eine Orientierung parallel zur Förderrichtung drückt und über den Verlauf der Kufe in dieser Orientierung hält. Die Form des Aufhängehakens ist so gewählt, dass dieser dabei im Traghaken des Förderelements weg von einem Minimum der potenziellen Energie nach oben gedrückt wird. Gleichzeitig wird der Rahmenbügel auch senkrecht zur Förderrichtung nach aussen gedrückt, und nimmt eine Lage an, in welcher der Beutel nach oben hin geöffnet ist. In dieser Position kann die Transporttasche von der Seite her durch die obere Öffnung befüllt werden. Nach dem Verlassen des Bereichs der Kufe gleitet der Aufhängehaken auf dem Traghaken wieder zurück zum Minimum der potenziellen Energie, und die Tasche schwenkt zurück in eine Orientierung quer Förderrichtung.

Die Publikationsschrift CH 720950 A1 beschreibt eine Fördertasche für eine Hängeförderanlage zum hängenden Fördern eines Fördergutes entlang einer Förderbahn, wobei die Fördertasche in Förderrichtung betrachtet eine vordere Taschenwand und eine der vorderen Taschenwand nachlaufende hintere Taschenwand aufweist, welche durch einen Taschenboden miteinander verbunden sind, und die vordere und hintere Taschenwand zusammen mit dem Taschenboden ein nach oben durch eine Taschenöffnung offenes Hauptaufnahmefach begrenzen. Die Fördertasche enthält ferner eine Halteeinrichtung zum klemmenden Aufnehmen eines flächigen Förderguts an der Aussenseite von mindestens einer der Taschenwände, insbesondere der Rückwand.

Die DE 10 2004 018569 B4 zeigt eine weitere Vorrichtung zum Beladen von Transporttaschen in einer Hängeförderanlage. Die Transporttaschen weisen einen quer zur Förderrichtung an einem Förderelement aufgehängten Rahmenbügel auf, welcher eine obere Öffnung der Tasche definiert. Eine an zwei Enden an dem Rahmenbügel befestigte flexible Stoffbahn bildet einen Beutel zur Aufnahme von Stückgutelementen. Seitenwandungen schliessen nur einen unteren Teil der Seiten des Beutels, so dass seitliche Einwurföffnungen verbleiben. Beim Bewegen der Transporttaschen entlang des Förderwegs durch die Vorrichtung bewegen entsprechend ausgestalteten Kulissen den im leeren Zustand der Transporttasche senkrecht hängenden Rahmenbügel in eine waagrechte Position, in welcher die seitlichen Einwurf Öffnungen maximal geöffnet sind. Die Artikel können nun manuell durch die seitlichen Öffnungen in die Tasche geworfen werden. Eine automatische Befüllung ist nicht möglich, da die oberen Öffnungen der Taschen wegen der Laufschiene des Fördersystems nicht zugänglich sind.

Die WO 2018 142242 A1 zeigt eine Fördereinheit zum hängenden Transport von Transportelementen in einem Fördersystem, insbesondere einem schienengeführten Fördersystem oder einem Förderkettensystem. Die Fördereinheit umfasst einen an einem Förderelement, insbesondere einem Laufwagen oder einem Förderkettenglied, angebrachten Traghaken, ein Transportelement, und einen am Transportelement angebrachten Aufhängehaken, wobei der Aufhängehaken im Traghaken hängend gelagert ist. Der Traghaken ist derart ausgestaltet, dass der Aufhängehaken im Traghaken zwei stabile Positionen einnehmen kann. Der Aufhängehaken in einer ersten stabilen Position ist gegenüber dem Aufhängehaken in einer zweiten stabilen Position um einen Winkel gedreht. Das Fördersystem ist mit Wirkanordnungen zur aktiven Drehung der Transporttasche ausgestaltet.

Moderne Transportelemente wie zum Beispiel Transporttaschen in Hängeförderanlagen weisen mehrere Aufnahmeplätze für Fördergüter auf. Die mehreren Aufnahmeplätze können unterschiedlich gestaltet sein, je nachdem welches Fördergut gefördert werden soll. Bei der seitlichen Befüllung der Transporttaschen mit Fördergütern stellt sich das Problem, dass die Transporttaschen in der richtigen Ausrichtung zur Beladeposition gefördert werden sollte, um die Befüllung effizient durchführen zu können. Selbst für eine Befüllung der Transporttaschen manuell, also von Hand, sollte die Transporttaschen korrekt ausgerichtet an die Beladeposition herangeführt werden.

So können Transpottaschen mit mehreren Aufnahmefächern ausgestattet sein, welche sich an verschiedenen Seitenwände der Transporttaschen befinden können. Zum Befüllen der einzelnen Aufnahmefächer mit Fördergüter ist es nun notwendig, dass die Transpottasche vor Erreichen der Beladeposition in die richtige Ausrichtung gebracht wird, so dass das Fördergut in das vorgesehenes Aufnahmefach eingeführt werden kann. Wenn die Transpottasche in einer falschen Ausrichtung zur Beladeposition gefördert wird, ist es notwendig, die Transporttasche manuell in die richtige Position zu drehen, welches die Beladung verzögert oder zu Fehlern bei der Beladung der Transporttaschen führen kann.

Es besteht allgemein das Bedürfnis nach Fortschritten in diesem Gebiet der Technik.

### Darstellung der Erfindung

Es ist eine Aufgabe der Erfindung, eine Fördereinheit zum hängenden Transport von Transportelementen in einem Fördersystem, insbesondere einem schienengeführten Fördersystem oder einem Förderkettensystem, bereitzustellen, welche ein einfaches und effiziente Beschicken bzw. Befüllen der Transportelemente erlaubt.

Eine andere Aufgabe der Erfindung ist es, ein entsprechendes Fördersystem zur Verfügung zu stellen.

Noch eine weitere Aufgabe der Erfindung ist das Bereitstellen einer Beladevorrichtung bzw. -station bzw. ein dazugehöriges Verfahren zum Einbringen von Fördergut in Transportelemente der Fördereinheiten.

Die Fördereinheit soll insbesondere das Beschicken bzw. Befüllen der Transportelement mit Fördergütern von einer ersten Seite und einer, der ersten Seite insbesondere gegenüberliegenden zweiten Seite - in Förderrichtung betrachtet - erlauben.

Eine weitere Aufgabe der Erfindung ist das Bereitstellen einer Entladevorrichtung bzw. -station bzw. ein dazugehöriges Verfahren zum Entladen von Fördergut von Transportelementen der Fördereinheiten.

Die Fördereinheit soll insbesondere das Entladen der Transportelement mit Fördergütern zu einer ersten Seite und einer, der ersten Seite insbesondere gegenüberliegenden zweiten Seite hin - in Förderrichtung betrachtet - erlauben.

Eine weitere Aufgabe der Erfindung ist das Bereitstellen von Transporttaschen für Fördereinheiten eines entsprechendes Fördersystems.

Diese und andere Aufgaben werden gelöst durch eine erfindungsgemässe Fördereinheit, ein erfindungsgemässes Fördersystem und eine erfindungsgemässe Drehvorrichtung sowie durch ein erfindungsgemässes Be- und Entladeverfahren und eine Transporttasche gemäss den unabhängigen Ansprüchen. Weitere Ausführungsformen und Weiterbildungen sind in den abhängigen Ansprüchen gegeben.

Es ist daher auch eine Aufgabe der vorliegenden Erfindung eine Drehvorrichtung für Transportelemente, wie Transporttaschen, für Hängeförderanlagen vorzuschlagen, welche ein Transportelement, z. B. eine Transporttasche mit mehreren Aufnahmefächer, vor Erreichen der Beladeposition zur vorgesehenen Seite dreht und ausrichtet, damit dieses beladen und gegebenenfalls zuvor geöffnet werden kann.

Die erfindungsgemässe Fördereinheit zum hängenden Transport von Transportelementen in einem Fördersystem, insbesondere einem schienengeführten Fördersystem oder einem Förderkettensystem, enthält:
- einen an einem Förderelement, insbesondere einem Laufwagen oder einem Förderkettenglied, angebrachten Traghaken,
- ein Transportelement, und
- einen am Transportelement angebrachten Aufhängehaken, wobei der Aufhängehaken im Traghaken hängend gelagert ist.

Der Traghaken ist erfindungsgemäss derart ausgestaltet, dass der Aufhängehaken im Traghaken mindestens drei stabile Positionen einnehmen kann. Hierbei ist der Aufhängehaken in einer ersten stabilen Position gegenüber dem Aufhängehaken in einer zweiten stabilen Position, d.h. bezogen auf eine zweite stabile Position des Aufhängehakens, um einen Winkel gedreht. Ferner ist der Aufhängehaken in der ersten stabilen Position gegenüber dem Aufhängehaken in einer dritten stabilen Position, d.h. bezogen auf eine dritte stabile Position des Aufhängehakens, um einen anderen Winkel als in der zweiten stabilen Position gedreht.

In der ersten stabilen Position befindet sich das Transportelement insbesondere in einer Förderstellung. In der zweiten stabilen Position befindet sich das Transportelement insbesondere in einer Belade- oder Entladestellung. In der dritten stabilen Position befindet sich das Transportelement insbesondere in einer Belade- oder Entladestellung.

"Stabile Position" bedeutet insbesondere, dass der Aufhängehaken bzw. das Förderelement mit dem Aufhängehaken in einer Ruhestellung in seiner Position bzw. Drehposition am Traghaken verharrt. "Ruhestellung" bedeutet insbesondere, dass sich die dazugehörige Fördereinheit nicht in einer Förderbewegung befindet. Dies kann z. B. an einer Be- oder Entladestation der Fall sein.

Das Verharren des Aufhängehakens in der "stabilen Position" kann ohne Fremdeinwirkung erfolgen. Dies ist insbesondere bei der ersten stabilen Position der Fall.

Das Verharren des Aufhängehakens in der "stabilen Position" kann auch durch ein von aussen auf den Aufhängehaken bzw. das Transportelement in der stabilen Position einwirkendes Anschlagelement bewirkt werden. Das Anschlagelement hält z. B. in einer Anschlagposition, in welcher das Transportelement bzw. der Aufhängehaken an das Anschlagelement anschlägt bzw. diesem ansteht, vor einem Zurückschwenken des Transportelements aus der zweiten bzw. der dritten stabilen Position in die erste stabile Position ab.

Der Traghaken kann ein offener oder geschlossener Haken sein. Ein geschlossener Haken kann z. B. als Öse bzw. ring- oder schlaufenförmiger Körper vorliegen.

Eine weitere vorteilhafte Weiterbildung der Fördereinheit erfolgt dadurch, dass der Aufhängehaken in der Art zwischen der ersten stabilen Position und der zweiten stabilen Position und der dritten stabilen Position hin und her überführbar bzw. bewegbar ist, dass der Aufhängehaken konstant auf dem Traghaken aufliegt.

Das heisst, der Aufhängehaken ist derart zwischen der ersten stabilen Position und der zweiten stabilen Position sowie zwischen der ersten stabilen Position und der dritten stabilen Position hin und her überführbar, dass der Aufhängehaken konstant auf dem Traghaken aufliegt.

Gemäss einer weiteren vorteilhaften Weiterbildung der Fördereinheit weist der Traghaken eine erste Auflageposition bzw. -stelle, eine zweite Auflageposition bzw. - stelle und eine dritte Auflageposition bzw. -stelle für den Aufhängehaken auf. Der Aufhängehaken liegt in der ersten stabilen Position auf der ersten Auflageposition bzw. -stelle auf, in der zweiten stabilen Position auf der zweiten Auflageposition bzw. -stelle auf, und in der dritten stabilen Position auf der dritten Auflageposition bzw. - stelle auf.

Zwischen der ersten Auflageposition und der zweiten Auflageposition und der dritten Auflageposition, ist je ein Verbindungssegment angeordnet, auf dem der Aufhängehaken gleitend zwischen der ersten stabilen Position, der zweiten stabilen Position und der dritten stabilen Position hin und her überführbar ist.

So ist insbesondere zwischen der ersten Auflageposition bzw. -stelle und der zweiten Auflageposition bzw. -stelle ein erstes Verbindungssegment und zwischen der ersten Auflageposition bzw. -stelle und der dritten Auflageposition bzw. -stelle ein zweites Verbindungssegment angeordnet.

Die Verbindungssegmente sind insbesondere als Armabschnitte des Traghakens ausgebildet.

Die erste, zweite und dritte Auflageposition bzw. -stelle weisen am Traghaken insbesondere voneinander verschiedene räumliche Anordnungen auf.

Die erste Auflageposition bzw. -stelle ist in einer Projektion der Auflagepositionen bzw. -stellen in einer Ebene senkrecht zur Förderrichtung insbesondere zwischen der zweiten und dritten Auflageposition bzw. -stelle angeordnet.

Die erste Auflageposition bzw. -stelle ist in Förderrichtung insbesondere der zweiten und dritten Auflageposition bzw. -stelle vorlaufend angeordnet.

Die erste, zweite und dritte Auflageposition bzw. -stelle werden insbesondere durch Auflageflächen ausgebildet.

Die erste Auflageposition bzw. -stelle kann durch eine Vertiefung oder Mulde am Traghaken ausgebildet sein. Die Achse der Vertiefung bzw. der Mulde verläuft insbesondere parallel zur Förderrichtung. Die erste Auflageposition bzw. -stelle kann in einer horizontalen Lage des Förderelementes auch durch eine horizontal ausgerichtete Auflagefläche ausgebildet sein.

Die zweite Auflageposition bzw. -stelle kann durch eine Vertiefung oder Mulde am Traghaken ausgebildet sein. Die Achse der Vertiefung bzw. der Mulde verläuft insbesondere quer bzw. senkrecht zur Förderrichtung. Die zweite Auflageposition bzw. -stelle kann in einer horizontalen Lage des Förderelementes auch durch eine horizontal ausgerichtete Auflagefläche ausgebildet sein.

Die dritte Auflageposition bzw. -stelle kann durch eine Vertiefung oder Mulde am Traghaken ausgebildet sein. Die Achse der Vertiefung bzw. der Mulde verläuft insbesondere quer bzw. senkrecht zur Förderrichtung und gegebenenfalls auch parallel zur Achse der Vertiefung bzw. der Mulde der zweiten Auflageposition bzw. -stelle. Die dritte Auflageposition bzw. -stelle kann in einer horizontalen Lage des Förderelementes auch durch eine horizontal ausgerichtete Auflagefläche ausgebildet sein.

Die Breite der Vertiefung bzw. der Mulde kann dem Durchmesser des Aufhängehakens im Kontaktabschnitt zum Traghaken entsprechen.

Gemäss einer weiteren, vorteilhaften Weiterbildung der Fördereinheit ist der Traghaken derart ausgestaltet, dass der Aufhängehaken in einer bestimmten ersten räumlichen Orientierung auf der ersten Auflageposition bzw. -stelle die erste stabile Position einnehmen kann, in der sich der Aufhängehaken in einer ersten Ebene ausrichtet. Ferner kann der Aufhängehaken in einer von der bestimmten ersten räumlichen Orientierung verschiedenen, zweiten räumlichen Orientierung auf der zweiten Auflageposition bzw. -stelle die zweite stabile Position einnehmen, in der sich der Aufhängehaken in einer zweiten Ebene ausrichtet. Ferner kann sich der Aufhängehaken in einer von der bestimmten zweiten räumlichen Orientierung verschiedenen dritten räumlichen Orientierung in der dritten Auflageposition bzw. - stelle die dritte stabile Position einnehmen, in der sich der Aufhängehaken in einer dritten oder ebenfalls in der zweiten Ebene ausrichtet.

In anderen Worten ist der Traghaken derart ausgestaltet, dass in einer bestimmten ersten räumlichen Anordnung der ersten Auflageposition bzw. -stelle am Traghaken der Aufhängehaken auf der ersten Auflageposition bzw. -stelle die erste stabile Position einnehmen kann, in der sich der Aufhängehaken in einer ersten Ebene ausrichtet. Ferner kann in einer von der bestimmten ersten räumlichen Anordnung verschiedenen zweiten räumlichen Anordnung der zweiten Auflageposition bzw. - stelle am Traghaken der Aufhängehaken auf der zweiten Auflageposition bzw. -stelle die zweite stabile Position einnehmen, in der sich der Aufhängehaken in einer zweiten Ebene ausrichtet. Des Weiteren kann in einer von der bestimmten zweiten räumlichen Anordnung verschiedenen dritten räumlichen Anordnung der dritten Auflageposition bzw. -stelle am Traghaken der Aufhängehaken auf der dritten Auflageposition bzw. stelle die dritte stabile Position einnehmen, in der sich der Aufhängehaken in einer dritten oder ebenfalls in der zweiten Ebene ausrichtet.

In einer bestimmten ersten räumlichen Orientierung bzw. Anordnung der ersten Auflageposition bzw. -stelle des Traghakens entspricht die erste stabile Position insbesondere einem Minimum der potenziellen Energie des hängend gelagerten Transportelements.

Der Aufhängehaken weist in der ersten stabilen Position gegenüber der zweiten und dritten stabilen Position insbesondere eine tiefere bzw. die tiefste potenzielle Energie auf.

So liegt die erste Auflageposition bzw. -stelle und somit auch der Aufhängehaken in der ersten stabilen Position gegenüber der zweiten und dritten Auflageposition bzw. - stelle bzw. der zweiten und dritten stabilen Position entlang einer horizontalen Förderstrecke in Schwerkraftrichtung betrachtet insbesondere auf einem tieferen Niveau.

Dies trifft insbesondere zu, wenn sich der Traghaken in einer Förderstellung befindet.

Durch Drehen des Aufhängehaken um einen bestimmten Drehwinkel, z. B. um 90° (Winkelgrad) ist dieser zwischen der ersten Position und der zweiten Position oder der dritten Position am Traghaken hin und her überführbar bzw. bewegbar.

Der Drehwinkel beträgt jeweils z. B. 45° bis 150°, insbesondere 90° (Winkelgrad).

Die Drehachse verläuft insbesondere senkrecht zur Förderrichtung. Die Drehachse verläuft insbesondere durch eine Längsachse des Transportelements, insbesondere durch eine Mittelängsachse des Transportelementes. Die Längsachse bzw. Mittelängsachse des frei hängenden Transportelements ist insbesondere vertikal ausgerichtet.

Die erfindungsgemässe Fördereinheit umfasst ein Transportelement mit einem Aufhängehaken, wobei der Aufhängehaken insbesondere durch Drehen des Transportelementes um eine Vertikale der Förderrichtung zwischen der ersten stabilen Position und der zweiten stabilen Position und der dritten stabilen Position hin und her überführbar bzw. bewegbar ist.

Der Aufhängehaken kann ein offener oder geschlossener Haken sein. Ein geschlossener Haken kann z. B. eine Öse bzw. einen ring- oder schlaufenförmigen Körper umfassen.

Ein in den Traghaken eingehängter oberen Abschnitt des Aufhängehakens, welcher z. B. ein Bogenstück ist, liegt insbesondere in einer (ersten) Ebene.

Die Ebene des oberen Abschnittes ist in der ersten stabilen Position insbesondere parallel zur Förderrichtung ausgerichtet. Die Ebene des oberen Abschnitts ist in der zweiten und/oder dritten stabilen Position insbesondere senkrecht zur Förderrichtung ausgerichtet.

Der Aufhängehaken kann einen unteren, einem Aufnahmefach des Transportelements zugewandten Abschnitt aufweisen, welcher z. B. mit einem Tragrahmen bzw. einer Querstange des Transportelements verbunden ist. Der untere Abschnitt liegt insbesondere in einer zweiten Ebene. Diese zweite Ebene ist in Förderposition des Transportelementes insbesondere senkrecht zur Förderrichtung ausgerichtet.

Die erste Ebene des oberen Abschnittes und die zweite Ebene des unteren Abschnittes verlaufen insbesondere parallel zur einer Mittelängsachse des Transportelements. Die beiden Ebenen sind insbesondere in einem Winkel zueinander angeordnet.

Der obere Abschnitt des Aufhängehakens ist gegenüber dem unteren Abschnitt insbesondere um einen Winkel und ganz besonders um 90° verdreht. Die Verdrehung ist insbesondere eine Verdrehung um eine Längsachse bzw. Mittelängsachse des Transportelements und ganz besonders eine Verdrehung um eine Vertikale bezogen auf eine hängende Position des Transportelements. Die Verdrehung ist insbesondere permanent.

Das Transportelement der Fördereinheit ist insbesondere ein Behälter mit mindestens einer flexiblen Wand, insbesondere eine flexiblen Gewebewand ist.

Das Transportelement bildet insbesondere ein Aufnahmefach für ein Fördergut aus.

Das Transportelement der Fördereinheit bildet insbesondere einen Tragrahmen aus. Der Tragrahmen kann eine oberen Querstange umfassen. Die Querstange ist in Förderposition insbesondere quer zur Förderrichtung ausgerichtet.

Das Transportelement bildet insbesondere eine Rückwand und Vorderwand aus.

Gemäss einer Weiterbildung weist die Fördereinheit ein Transportelement auf, wobei das Transportelement ein Behälter mit mindestens einer stabilen Wand, insbesondere einer Wand aus einer Hohlkammerplatte ist.

Das Transportelement der Fördereinheit dient der Aufnahme von Fördergütern.

Das Transportelement ist insbesondere eine Transporttasche.

Die Transporttasche umfasst insbesondere eine hintere Taschenwand, auch Rückwand genannt, und eine vordere Taschenwand, auch Vorderwand genannt, die über einen Taschenboden derart flexibel miteinander verbunden sind, dass sie zwischen einem ersten Zustand, in welcher sie eine oben offene und von oben befüllbares Aufnahmefach ausbildet, und einem zweiten Zustand, in welcher sie dicht nebeneinander liegen und eine zusammengefaltete Tasche ausbildet. Diese Zustände sind durch hin und her bewegbar erreichbar.

Die Rückwand ist insbesondere nach oben über die Höhe der Vorderwand hinaus mit einem Tragabschnitt zum Befestigen der Transporttasche am Förderelement verlängert.

Der Aufhängehaken ist insbesondere an einem oberen Ende des Tragrahmens des Transportelements angebracht bzw. mit dem Tragrahmen verbunden.

Der Aufhängehaken ist insbesondere über eine obere Querstange des Tragrahmens mit dem Tragrahmen verbunden.

Die erfindungsgemässe Fördereinheit mit einer Transporttasche bildet ein Hauptaufnahmefach für Fördergüter aus. Gemäss einer Weiterbildung weist die Transporttasche mindestens ein weiteres Nebenaufnahmefach an mindestens einer Taschenwand der Transporttasche auf.

Die Erfindung betrifft auch eine Drehvorrichtung zum Drehen der Transportelemente von Fördereinheiten in einem Fördersystem, insbesondere ein durch Förderschienen geführtes Fördersystem oder einem Förderkettensystem, zum hängenden Fördern von Fördergütern entlang einem Förderkorridor.

Unter "Förderkorridor" ist insbesondere ein entlang der Förderrichtung führender Förderraum zu verstehen, durch welchen sich die Fördereinheiten bzw. die Förderelemente der Fördereinheiten bewegen.

Das Fördersystem weist insbesondere mindestens eine Beladestation auf, zu welcher die Transportelemente gefördert werden können. Die Transportelemente sind zum Beladen an der Beladestation um ihre vertikale Achse drehbar.

Die Drehvorrichtung zeichnet sich dadurch aus, dass diese mindestens ein schaltbares Einwirkelement enthält, welche aus einer Ruheposition so in den Förderkorridor der Transportelemente in eine Einwirkposition einbringbar sind, dass sich die Transportelemente in Förderrichtung um ihre vertikale Achse nach rechts oder nach links drehen, bevor die Tasche z. B. ihre Beladeposition in der Beladestation erreicht.

Das mindestens eine Einwirkelement ist in seiner Ruheposition insbesondere ausserhalb des Förderkorridors angeordnet.

Der Drehvorgang wird ausgelöst, indem die Transportelemente während ihrer Förderung an ein in den Förderkorridor eingreifendes bzw. hineinragendes Einwirkelement anstossen. Die Transportelemente stossen insbesondere mit einem aussermittigen Abschnitt an das Einwirkelement an.

Die Transportelemente werden durch die Drehvorrichtung bzw. das Einwirkelement insbesondere um 90° nach rechts oder links gedreht.

Das mindestens eine Einwirkelement wird insbesondere von oben in den Förderkorridor in seine Einwirkposition bewegt. Das mindestens eine Einwirkelement kann aber auch von der Seite oder von unten in den Förderkorridor in seine Einwirkposition bewegt werden.

Die Drehvorrichtung weist insbesondere eine Antriebseinheit auf, welche das mindestens eine Einwirkelement antreibt.

Die erfindungsgemässe Drehvorrichtung weist insbesondere zwei wechselseitig schaltbare Einwirkelemente auf, welche in einer Ruheposition ausserhalb des Förderkorridors angeordnet sind.

So sorgt ein erstes Einwirkelement dafür, dass das Transportelement nach rechts und ein zweites Einwirkelement dafür, dass das Transportelement nach links gedreht wird.

So kann in Förderrichtung betrachtet das erste Einwirkelement rechts und das zweite Einwirkelement links vom Traghaken des vorbei geförderten Fördereinheit bzw. von einer Förderschiene oder einer Förderkette der Hängefördereinrichtung angeordnet sein.

Die beiden Einwirkelemente können miteinander mechanisch gekoppelt sein und über eine Drehachse wechselseitig von oben oder von unten in den Förderkorridor hinein und wieder aus diesem hinaus bewegbar sein. So können die Einwirkelemente über eine Wippenkonstruktion miteinander mechanisch als Wippe gekoppelt sein.

Die erfindungsgemässe Drehvorrichtung wird insbesondere durch eine Antriebseinheit angetrieben, welche die zwei Einwirkelemente wechselseitig schaltet.

Die Antriebseinheit zum Antreiben des mindestens einen Einwirkelements wird insbesondere von einer Steuerungsvorrichtung gesteuert.

Das mindestens eine Einwirkelement der Drehvorrichtung ist gemäss einer bevorzugten Weiterbildung stabförmig ausgebildet.

Eine weitere Weiterbildung der Drehvorrichtung weist Einwirkelemente auf, die als Rollen ausgebildet sind.

Die erfindungsgemässe Drehvorrichtung weist mindestens ein Einwirkelement auf, welches im Bereich des Tragrahmens der Transportelemente in den Förderkorridor der Transportelemente einbringbar ist. Bei zwei Einwirkelementen sind diese wechselseitig im Bereich des Tragrahmens der Transportelemente in den Förderkorridor der Transportelemente einbringbar.

Gemäss einer Ausführungsvariante des Fördersystems ist der Traghaken entlang der Förderbahn in einer senkrecht zur Förderrichtung angeordneten Ebene neigbar bzw. kippbar, so dass der Aufhängehaken bei einer Neigung des Traghakens in eine erste Neigungsrichtung auf der zweiten Auflageposition bzw. -stelle die zweite stabile Position und bei einer Neigung des Traghakens in eine der ersten Neigungsrichtung entgegengesetzten, zweiten Neigungsrichtung auf der dritten Auflageposition bzw. - stelle die dritte stabile Position einnehmen kann. Die Neigungsstellungen des Traghakens entsprechen insbesondere Belade- oder Entladestellungen.

In einer neigungsfreien Stellung des Traghakens kann der Aufhängehaken auf der ersten Auflageposition die erste stabile Position einnehmen. Die neigungsfreie Stellung entspricht insbesondere der Förderstellung des Traghakens bzw. Fördereinheit.

Eine "stabile Position" bedeutet hier insbesondere, dass der Aufhängehaken nicht selbsttätig aus der Auflageposition bzw. -stelle herausrutschen bzw. -gleiten kann. Durch das Neigen bzw. Kippen des Traghakens wird die ersten Auflageposition bzw. -stelle - je nach Neigungsrichtung - gegenüber der zweiten oder gegenüber der dritten Auflageposition bzw. -stelle auf ein höheres Niveau potenzieller Energie gehoben.

Gemäss einer Weiterbildung weist bei einer Neigung des Traghakens in die erste Neigungsrichtung die zweiten Auflageposition bzw. -stelle gegenüber der ersten und dritten Auflageposition bzw. -stelle das tiefste potenzielle Energieniveau auf. Dadurch rutscht der Aufhängehaken schwerkraftbedingt und insbesondere selbsttätig von der ersten in die zweite Auflageposition bzw. -stelle. Ferner weist bei einer Neigung des Traghakens in die zweite Neigungsrichtung die dritte Auflageposition bzw. -stelle gegenüber der ersten und zweiten Auflageposition bzw. -stelle das tiefste potenzielle Energieniveau auf. Dadurch rutscht der Aufhängehaken schwerkraftbedingt und insbesondere selbsttätig von der ersten in die dritte Auflageposition bzw. -stelle. Ferner weist bei einer neigungsfreien Lage des Traghakens die erste Auflageposition bzw. -stelle gegenüber der zweiten und dritten Auflageposition bzw. -stelle das tiefste potenzielle Energieniveau auf. Dadurch rutscht der Aufhängehaken schwerkraftbedingt und insbesondere selbsttätig von der zweiten oder dritten in die erste Auflageposition bzw. -stelle zurück.

Die Neigung des Traghakens wird zum Beispiels durch eine entsprechende Neigung des Laufwagens erreicht. Während in der Förderstellung eine senkrecht zu den Drehachsen der Tragrollen des Laufwagens angeordnete Laufwagenebene vertikal ausgerichtet ist, bildet diese Laufwagenebene in der geneigten bzw. gekippten Position des Laufwagens zu einer Vertikalen einen spitzen Winkel aus.

Der Laufwagen und mit diesem der Traghaken lässt sich wiederum durch ein Verdrehen bzw. Tordieren der Laufschiene entlang der Förderbahn in die erste oder zweite Richtung neigen. So kann die Laufschiene an Belade- oder Entladestationen, in welchen der Laufwagen bzw. Traghaken sowie das Transportelement eine Belade- oder Entladestellung einnimmt, gegenüber einem Förderabschnitt, in welchem der Laufwagen bzw. Traghaken sowie das Transportelement eine Förderstellung einnimmt, eine Verdrehung aufweisen.

Dank dieser Weiterbildung kann gegebenenfalls auf eine Drehvorrichtung verzichtet werden. Es kann allerdings auch vorgesehen sein, dass zum Überführen in jeweils eine andere stabile Position die Unterstützung durch eine Drehvorrichtung benötigt wird.

Die Transportelemente werden insbesondere mit einer quer zur Förderrichtung orientierten Rückwand gefördert. Der Aufhängehaken befindet sich dabei in der ersten Auflageposition bzw. -stelle in einer ersten stabilen Position.

Die Erfindung betrifft auch eine Beladevorrichtung bzw. -station und ein dazugehöriges Verfahren zum Beladen von Transportelementen mit Fördergütern. Die Beladung mit den Fördergütern erfolgt quer zum Förderkorridor der Transportelemente.

Das heisst die Transportelemente werden in Förderrichtung betrachtet von der Seite und insbesondere quer zur Förderrichtung beladen.

Die Transportelemente werden vor dem Beladen in oder vor der Beladestation mit der Drehvorrichtung um ihre vertikale Achse in die zum Beladen vorgesehene Ausrichtung gedreht.

Gemäss einer Weiterbildung der Beladevorrichtung bzw. -station bzw. des dazugehörigen Verfahrens werden die Transportelemente zum Beladen mit Fördergütern um den Traghaken quer zur Förderrichtung geschwenkt, insbesondere um 45° bis 150°, ganz besonders 90°, geschwenkt.

So können die Transportelemente von einer Förderausrichtung, in welcher die Rückwand quer zur Förderrichtung angeordnet ist, um einen Drehwinkel von 90° zu einer der beiden Seite hin in eine Beladeausrichtung gedreht werden, in welcher die Rückwand parallel zur Förderrichtung angeordnet ist.

Je nach Drehung zur ersten oder zweiten Seite hin, befindet sich der Aufhängehaken dabei an der zweiten oder dritten Auflagestelle in der zweiten oder dritten stabilen Position.

Die Transportelemente können dabei mittels Drehvorrichtung insbesondere wahlweise zu beiden Seiten hin gedreht und in die zweite oder dritte stabile Position gebracht werden.

Die Erfindung betrifft auch eine Entladevorrichtung bzw. -station sowie ein Verfahren zum Entladen von Transportelementen von Fördergütern. Die Entladung der Fördergüter erfolgt quer zum Förderkorridor der Transportelemente.

Das heisst die Transportelemente werden in Förderrichtung betrachtet von der Seite und insbesondere quer zur Förderrichtung entladen.

Die Transportelemente sind vor dem Entladen in oder vor der Entladevorrichtung bzw. -station mit einer Drehvorrichtung um ihre vertikale Achse in die vorgesehene Ausrichtung zum Entladen drehbar.

Gemäss einer Weiterbildung der Entladevorrichtung bzw. -station bzw. des Verfahrens zum Entladen von Transportelementen von Fördergütern werden die Transportelemente um den Traghaken quer zur Förderrichtung zum Entladen des Fördergutes geschwenkt, insbesondere um 45° bis 150°, ganz besonders um 90°, geschwenkt.

So können die Transportelement von einer Förderausrichtung, in welcher die Rückwand quer zur Förderrichtung angeordnet ist, um einen Drehwinkel von 90° zu einer der beiden Seite hin in eine Entladeausrichtung gedreht werden, in welcher die Rückwand parallel zur Förderrichtung angeordnet ist.

Je nach Drehung zur ersten oder zweiten Seite hin, befindet sich der Aufhängehaken dabei an der zweiten oder dritten Auflagestelle in der zweiten oder dritten stabilen Position.

Die Transportelemente können dabei mittels Drehvorrichtung insbesondere wahlweise zu beiden Seiten hin gedreht und in die zweite oder dritte stabile Position gebracht werden.

Die Erfindung betrifft auch ein Fördersystem zum geführten, hängenden Transport von Transportelementen, insbesondere Transporttaschen, entlang einer Förderbahn.

Das Fördersystem kann ein schienengeführtes Fördersystem mit einer Förderschiene und mit mindestens einer weiter oben beschriebenen Fördereinheit sein, entlang welcher Fördergüter mittels den Fördereinheiten bzw. deren Transportelementen hängend gefördert bzw. transportiert werden.

Das Fördersystem kann ein Förderkettensystem mit einer Förderkette und mit mindestens einer weiter oben beschriebenen Fördereinheit sein, entlang welcher Fördergüter mittels den Fördereinheiten bzw. deren Transportelementen hängend gefördert bzw. transportiert werden.

Das Fördersystem enthält insbesondere mindestens eine Beladevorrichtung bzw. - station.

Das Fördersystem enthält insbesondere mindestens eine Entladevorrichtung bzw. - station.

Das Fördersystem enthält insbesondere mindestens eine Drehvorrichtung. So ist zum Beispiel eine Drehvorrichtung stromaufwärts von der mindestens einen Beladevorrichtung bzw. -station angeordnet. Ferner ist insbesondere auch eine Drehvorrichtung stromaufwärts von der mindestens einen Entladevorrichtung bzw. -station angeordnet.

Das Fördersystem kann auch mindestens eine Stopp- und Freigabevorrichtung enthalten, welche stromaufwärts von der mindestens einen Beladestation sowie insbesondere auch stromaufwärts einer der Beladestation zugeordneten Drehvorrichtung angeordnet ist.

Das Fördersystem kann auch mindestens eine Stopp- und Freigabevorrichtung enthalten, welche stromaufwärts von der mindestens einen Entladestation sowie insbesondere auch stromaufwärts einer der Entladestation gegebenenfalls zugeordneten Drehvorrichtung angeordnet ist.

Die Stopp- und Freigabevorrichtung, dient dem Anhalten der Fördereinheiten entlang der Förderstrecke und dem Freigeben der Fördereinheiten für den einzelnen oder gruppenweise Weitertransport z. B. zu einer Be- oder Entladevorrichtung hin.

Die Erfindung betrifft auch eine Transporttasche für Fördereinheiten eines Fördersystem, insbesondere ein durch Förderschienen geführtes Fördersystem oder ein Förderkettensystem, zum hängenden Fördern von Fördergütern entlang einer Förderschiene.

Das heisst, die Transportelemente der Fördereinheiten sind insbesondere Transporttaschen.

Die Transporttasche enthält insbesondere einen Tragrahmen und weist im oberen Teil des Tragrahmens einen Aufhängehaken auf. Der Aufhängehaken bildet insbesondere einen oberen Abschnitt, z. B. in Form einer Öse aus.

Der Tragrahmen kann z. B. eine Taschenöffnung einfassen. Der Tragrahmen kann z. B. eine Rückwand umrahmen.

Der Tragrahmen der geschlossenen Transporttasche ist in Förderposition insbesondere senkrecht zur Förderrichtung ausgerichtet.

Der obere Abschnitt bzw. die Öse des Aufhängehakens ist insbesondere rechtwinklig gegenüber dem Tragrahmen der geschlossenen Transporttasche verdreht.

Die erfindungsgemässe Drehvorrichtung kann insbesondere auch mit einer Entladevorrichtung zusammenwirken. So ist es möglich, dass die Transporttasche mit dem Fördergut zuerst mit der Drehvorrichtung gedreht wird und anschliessend kann die Transporttasche entleert werden. Dies geschieht z. B., in dem die Transporttasche am äussersten Ende angehoben wird, bis das Fördergut aus der Transporttasche herausfällt.

Generell kann auch ohne Drehvorrichtung eine Entladevorrichtung betrieben werden. So ist es möglich, dass die Transporttasche mit dem Fördergut quer zur Förderrichtung ausgerichtet bleibt. Durch die Ausgestaltung der erfindungsgemässen Transporttasche mit dem Aufhängehaken, welcher eine um 90° (Winkelgrad) verdrehte Öse zum Einhängen in den Traghakens aufweist, nun kann die Transporttasche entleert werden, in dem die Transporttasche am äussersten Ende angehoben wird, bis das Fördergut aus der Transporttasche herausfällt.

Vorteilhafterweise ist beidseits der Förderschiene bzw. Förderkette je mindestens ein Einwirkelement der Drehvorrichtung angeordnet. Dadurch kann das eine Einwirkelement rechts der Förderschiene bzw. der Förderkette wirken und das andere links der Förderschiene bzw. der Förderkette.

Die Steuerungsvorrichtung steuert insbesondere den ganzen Ablauf der Vorrichtungen bzw. des Fördersystems. Sie kann zusätzlich dazu ausgestattet sein, die Warenflüsse innerhalb der Förderanlage bzw. des Fördersystems zu steuern.

Die Steuerungsvorrichtung steuert die Stopp- und Freigabevorrichtung, um die Fördereinheiten einerseits anzuhalten zu können, aber auch andererseits die Fördereinheiten für die Förderung frei geben zu können.

Der Aufhängehaken bildet am obersten Ende eine Öse aus, welcher auf dem Traghaken aufliegt. Die Öse ist insbesondere um 90° (Winkelgrad) zum Tragrahmen der Transporttasche verdreht. Im fördernden Zustand der Transporttasche ist die Öse parallel zu Förderrichtung der Transporttasche ausgerichtet.

Die Erfindung ist für eine Förderanlage bzw. ein Fördersystem mit Aussenläufer als Laufwagen beschrieben. Selbstverständlich eignet sich die erfindungsmässige Förderanlage auch für Innenläufern als Laufwagen der Förderanlage bzw. des Fördersystems, womit diese Erfindung auch Innenläuferanlage mit umfasst.

Eine Fördereinheit kann einen oder mehrere Aufnahmeplätze für Fördergüter aufweisen. Der oder die Aufnahmeplätze sind insbesondere beweglich verschliessbar. Eine Transportelement kann eine Transporttasche sein, die mehrere Aufnahmeplätze aufweist, in Form von Aufnahmefächer innerhalb der Transporttasche oder ausserhalb an den Taschenwänden der Transporttasche.

Die Aufnahmeplätze können verschliessbar sein und das Fördergut kann tragend gehalten gefördert werden. Das Fördergut kann aber auch während der Förderung klemmend gehalten werden. Auch eine Klammer kann als Aufnahmeplatz bzw. als Aufnahmefach betrachtet werden, da das Fördergut klemmend gehalten und gefördert wird.

Während der Förderung können auch andere Aufnahmefächer mit Fördergüter befüllt werden. So kann die Fördereinheit mehrere Fördergüter gleichzeitig fördern.

Eine weitere Variante einer erfindungsgemässen Fördereinheit kann ein Kleiderbügel sein, der als Transportelement zur Anwendung kommen. Hierbei ist vorteilhaft, dass die Kleidungsstücke mit dem Kleiderbügel gedreht werden können, zum Beispiel zum Zwecke der Inspektion. So können Kleidungsstücke für die weitere Verarbeitung temporär auf Kleiderbügel aufgehängt werden, beispielsweise für die Verarbeitung von Retouren im Versandhandel, oder für Garderoben.

Mit Hilfe der Drehvorrichtung können Transporttaschen in Förderrichtung betrachtet entweder nach links oder nach rechts gedreht werden. Somit können an einer Beladevorrichtung bzw. -station verschiedene Transporttaschenseiten mit Fördergütern befüllt werden. Es können also verschiedene Aufnahmefächer einer Transporttasche mit Fördergütern beladen werden.

Der Tragrahmen von Transporttaschen kann einteilig sein oder aber mehrteilig aufgebaut sein.

Die Transporttasche kann über eine Taschenwand an den Laufwagen befestigt sein. An dieser Taschenwand kann ein Aufnahmefach vorlaufend angebracht sein, oder aber nachlaufend angebracht sein. Die am Laufwagen befestigte Taschenwand kann aber auch sowohl ein nachlaufendes Aufnahmefach und ein vorlaufendes Aufnahmefach aufweisen. Zudem kann die Transporttasche mit weiteren Aufnahmefächern für Fördergüter ausgestattet sein.

Erfindungsgemässe Transportelemente können aber auch Transportgestelle sein, die Fördergüter befördern. So weisen die Transportgestelle in der Regel Platzierungsstellen auf, an denen die Fördergüter aufgehängt oder abgelegt werden können. Auch diese Transportgestelle müssen oft für die Beladung oder zur Entladung gedreht und ausgerichtet werden.

Nachfolgend wird der Erfindungsgegenstand anhand von Ausführungsbeispielen, welche in den beiliegenden Figuren dargestellt sind, näher erläutert. Es zeigen jeweils schematisch eine:
- Figur 1a:: Eine erfindungsgemässen Fördereinrichtung in Seitenansicht;
- Figur 1b:: Vorderansicht einer erfindungsgemässen Fördereinrichtung;
- Figur 2:: perspektivische Ansicht der erfindungsgemässen Fördereinrichtung von Laufwagen mit Aufhängung;
- Figur 3:: perspektivische Ansicht der erfindungsgemässen Fördereinrichtung von Laufwagen mit Traghaken;
- Figur 4:: perspektivische Ansicht der erfindungsgemässen Fördereinrichtung mit der Vorderseite einer geöffneten Transporttasche;
- Figur 5:: perspektivische Ansicht eines Ausschnittes der Figur 4;
- Figur 6:: perspektivische Ansicht der erfindungsgemässen Fördereinrichtung mit der Rückseite einer geöffneten Transporttasche;
- Figur 7:: perspektivische Ansicht eines Ausschnittes der Figur 6;
- Figur 8:: perspektivische Ansicht der erfindungsgemässen Fördereinrichtung in Förderposition von links;
- Figur 9:: perspektivische Ansicht der erfindungsgemässen Fördereinrichtung in Förderposition von rechts;
- Figur 10-12:: verschiedene Transporttaschen mit einem Hauptförderfach und einem Nebenförderfach jeweils in Förderposition;
- Figur 13:: seitliche Ansicht der erfindungsgemässen Fördereinrichtung mit einer Transporttasche in Beladeposition mit einer parallelen Ausrichtung der Transporttasche zu Förderrichtung;
- Figur 14:: seitliche Ansicht der erfindungsgemässen Fördereinrichtung wie in Figur 13, allerdings die Rückseite;
- Figur 15:: perspektivische Ansicht der erfindungsgemässen Drehvorrichtung;
- Figur 16:: perspektivische Ansicht der erfindungsgemässen Beladestation;
- Figur 17:: perspektivische Ansicht eines in der Förderschiene geführten Laufwagens mit Traghaken in einer Belade- oder Entladestellung gemäss einer weiteren Ausführungsform.

Die nachfolgend beschriebenen Ausführungsbeispiele stehen lediglich beispielhaft für den Erfindungsgegenstand und haben keine beschränkende Wirkung. Grundsätzlich sind in den Figuren gleiche Teile mit gleichen Bezugszeichen versehen.

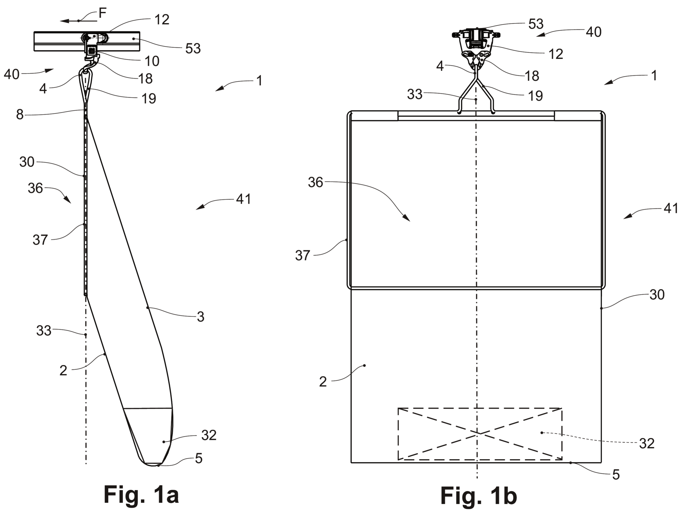

Die **Figur** 1a zeigt eine Fördereinheit 1 mit einem Fördergut 32 in Seitenansicht. Die **Figur 1b** zeigt dieselbe Fördereinheit 1 von vorne. Die Fördereinheit 1 umfasst ein Förderelement 40 in Form eines Laufwagens 12 und ein Transportelement 41 in Form einer Transporttasche 30. Die Transporttasche 30 umfasst einen Tragrahmen 8, an dem eine Tragschlaufe, insbesondere Gewebeschlaufe befestigt ist. Das obere Ende der Tragschlaufe ist an einer oberen Querstange des Tragerahmens 8 befestigt. Das andere, untere Ende der Trageschlaufe ist an einer unteren Querstange des Tragrahmens 8 der Transporttasche 30 befestigt.

Das Förderelement 40 umfasst den Laufwagen 12 mit einem daran angeordneten bzw. befestigten Traghaken 18. Der Laufwagen 12 umfasst Tragrollen 13 und läuft über diese geführt in bzw. entlang einer Förderschiene 53 in Förderrichtung F. Der Tragrahmen 8 bildet am oberen Ende bzw. an der oberen Querstange eine schlaufenförmige Öse 4 aus, die als Aufhängehaken 19 der Transporttasche 30 genutzt wird. Der Aufhängehaken 19 des Tragrahmens 8 der Transporttasche 30 ist in den Traghaken 18 des Laufwagens 12 eingehängt.

Der Tragrahmen 8 der Transporttasche 30 besteht aus einem verformen Draht, der einen geschlossenen Rahmen ausbildet, in Form eines Drahtbügels 37. Das obere Ende des Aufhängehakens 19, also die Öse 4, ist um 90° zum Tragrahmen 8 verdreht. Der Drahtbügels 37 bildet die Taschenöffnung 36, durch welche die Transporttasche 30 mit Fördergüter 32 wie bspw. Artikel befüllt werden können. Hinter der Taschenöffnung 36 befindet sich eine hintere Taschenwand 3, welche eine Seitenwand der Transporttasche 30 ausbildet. Eine vordere Taschenwand 2 ist an der unteren Querstange des Tragrahmens 8 befestigt und bildet die zweite Seitenwand der Transporttasche 30 aus. Die beiden Seitenwände werden nach unten mittels des Taschenbodens 5 miteinander verbunden. Der Raum, der begrenzt wird zwischen der vorderen Taschenwand 2, der hinteren Taschenwand 3 und dem Taschenboden 5 ist ein Aufnahmefach und wird als Hauptaufnahmefach 9 für Fördergüter 32 genutzt.

Eine Transporttasche 30 kann weitere Aufnahmefächer für Fördergüter 32 aufweisen, insbesondere Nebenförderfächer.

Die Transporttasche 30 weist eine Vertikale 33 in der Taschenmitte auf, um welche die Transporttasche 30 gedreht, beziehungsweise geschwenkt werden kann. Die Vertikale 33 bildet entsprechend eine Drehachse aus.

Die Transporttasche 30 kann symmetrische aufgebaut sein.

Der Laufwagen 12 kann mittels einer Antriebvorrichtung angetrieben werden, hier nicht gezeigt.

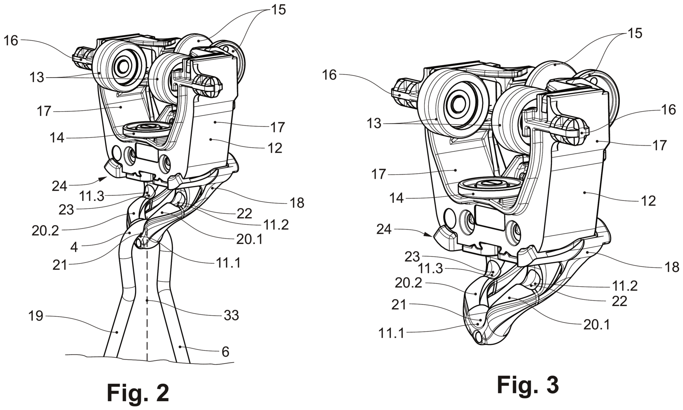

Die **Figur 2** und **Figur 3** zeigen den Laufwagen 12 mit Traghaken 18 in perspektivischer Ansicht. Der Laufwagen 12 besteht aus einem U-förmigen Grundkörper, der zwei Laufwagenschenkel 17 ausbildet. An den beiden Laufwagenschenkel 17 sind je eine Tragrolle 13 innenseitig angeordnet. Die Tragrollen 13 übernehmen die Traglast des Fördergutes 32. Hinter den beiden Tragrollen 13 sind zwei Stützrollen 15 angeordnet, die fluchtend zu den Tragrollen 13 orientiert sind. Tragrollen 13 und Stützrollen 15 laufen in der Förderschiene 53, wobei der Laufwagen 12 als Aussenläufer ausgebildet ist. Unterhalb der Tragrollen 13 und den Stützrollen 15 sind zwei Führungsrollen 14 derart hintereinander angeordnet, dass ihre Drehachsen orthogonal zu den Drehachsen der Tragrollen 13 und Stützrollen 15 orientiert sind. Die Führungsrollen 14 dienen zur seitlichen Führung des Laufwagens 12. Der Laufwagen 12 weist seitlich an den Laufwagenschenkeln 17 jeweils ein Mitnahmebolzen 16 auf, der am Laufwangenschenkel 17 nach aussen absteht. An den Mitnahmebolzen 16 kann der Laufwagen 12 mit Hilfe von Mitnahmeelemente angetrieben werden, hier nicht gezeigt.

In Figur 2 und Figur 3 ist unterhalb des Laufwagens 12 ein Traghaken 18 am Laufwagen 12 befestigt. Die Befestigung ist hier über eine Schwalbenschwanzführung realisiert, die über eine Schnappverbindung 24 gesichert ist. Die Verbindung zwischen Laufwagen 12 und Traghaken 18 lässt sich wieder lösen.

In Figur 2 ist in den Traghaken 18 ein Aufhängehaken 19 eingesetzt bzw. eingehängt. Die schlaufenförmige Öse 4 des Aufhängehakens 19 liegt in der ersten stabilen Position 21 des Traghakens 18. Die Öse 4 wird in einer die erste stabile Position 21 ausbildenden, ersten Vertiefung 11.1 gehalten. Die erste stabile Position 21 des Traghakens 18 zeichnet sich dadurch aus, dass die Transporttasche 30 bzw. der oberen Querstange unterhalb des Aufhängehakens 19 senkrecht zur Förderrichtung F des Laufwagens 12 ausgerichtet ist. Ein Verdrehen oder Schwenken der Transpottasche 12 um die Vertikale 33 führt zu einem Herauswinden des Aufhängehakens 19 der Transporttasche 30 aus der ersten stabilen Position 21 des Traghakens 18.

Das Verdrehen oder Schwenken der Transpottasche 12 bzw. ein Drehen des Rahmengestells 6 der Transpottasche 1 entgegen der Uhrzeigerrichtung führt dazu, dass die Öse 4 sich aus der ersten stabilen Position 21 herauswindet und sich entlang eines zwischen der ersten 21 und einer zweiten Position 22 angeordneten, ersten Verbindungssegmentes 20.1 nach links aufwärtsschiebt, bis die Öse 4 des Aufhängehakens 19 die zweite stabile Position 22 erreicht, wo die Öse 4 zumindest temporär in einer die zweite stabile Position 22 ausbildenden, ersten Vertiefung 11.1 gehalten wird. Durch die Verdrehung des Rahmengestelles 6 der Transporttasche 30 ist die Ausrichtung der Transporttasche 30 bzw. der oberen Querstange nun parallel zur Förderrichtung F des Laufwagens 12. Die Taschenöffnung 36 ist in Förderrichtung F des Laufwagens 12 nach links ausgerichtet. Die Transporttasche 30 kann nun zum Beispiel von links seitlich befüllt werden.

Ein Drehen des Rahmengestells 6 der Transpottasche 1 in Uhrzeigerrichtung führt dazu, dass die Öse 4 sich aus der ersten stabilen Position 21 herauswindet und sich entlang eines zwischen der ersten 21 und einer dritten Position 23 angeordneten, zweiten Verbindungssegmentes 20.2 nach rechts aufwärtsschiebt, bis die Öse 4 des Aufhängehakens 19 die dritte stabile Position 23 erreicht, wo die Öse 4 zumindest temporär in einer die dritte stabile Position 22 ausbildenden, dritten Vertiefung 11.3 gehalten wird. Durch die Verdrehung des Rahmengestelles 6 der Transporttasche 30 ist die Ausrichtung der Transporttasche 30 bzw. der oberen Querstange nun auch parallel zur Förderrichtung F des Laufwagens 12. Die Taschenöffnung 36 ist in Förderrichtung F des Laufwagens 12 nach rechts ausgerichtet. Die Transporttasche 30 kann nun zum Beispiel von rechts seitlich befüllt werden.

Der Traghaken 18 besitzt drei erwähnten Vertiefungen 11.1-11.3 für den Aufhängehaken 19 in denen der Aufhängehaken 19 bzw. dessen Öse eine stabile Position bzw. Lage einnehmen kann. In jeder der drei stabilen Lagen bzw. Positionen (21, 22, 23) hat die Transporttasche 30 eine andere Ausrichtung relativ zum Laufwagen 12 und zur Förderrichtung F des Laufwagens 12. Durch die unterschiedlichen Ausrichtungen der Transporttasche 30 lassen sich unterschiedliche Operationen mit der Transporttasche 30 durchführen, wie Befüllen, Leeren oder Fördern der Transporttaschen 30.

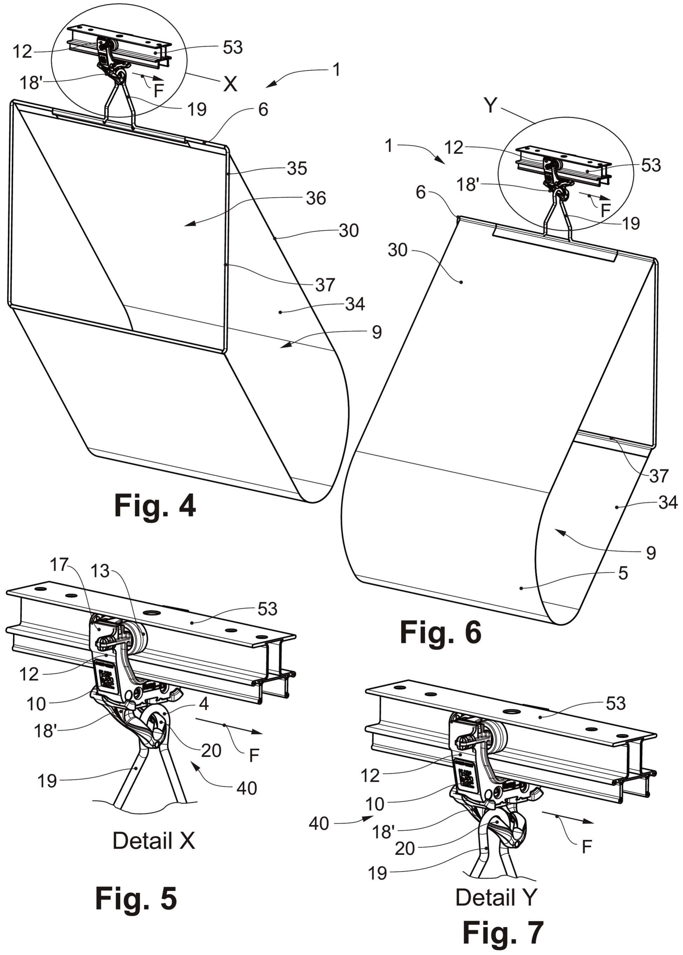

**Figur 4** und **Figur 6** zeigen den gleichen Laufwagen 12 mit abgeänderten Traghaken 18' und dieselbe Transporttasche 30 wie in Figur 1 und Figur 2. Allerdings ist die Transporttasche 30 um 180° (Winkelgrad) gedreht in den Traghaken 18' eingesetzt. Somit hat die Transpottasche 30 in Figur 4, welche entgegen dem Uhrzeiger gedreht ist, eine Taschenöffnung 36 die nach rechts in Förderrichtung F ausgerichtet ist. Diese Transporttasche 30 lässt sich beispielweise nun von rechts befüllen. Die Transporttasche 30 in Figur 6, welche in Uhrzeigerrichtung gedreht ist, weist nun eine Taschenöffnung 36 auf, die nach links in Förderrichtung F ausgerichtet ist. Die Transporttasche 30 lässt sich beispielweise nun von links befüllen.

Die **Figur 5** gibt einen Detailausschnitt der Figur 4 wieder, in dem der Laufwagen, der Traghaken 18' und der Aufhängehaken 19 gezeigt ist. Der Traghaken 18' besitzt keine ausgeprägten stabilen Auflageposition bzw. -stellen 22 und 23, da die Vertiefungen 11 an diesen Stellen fehlen. Somit sind die beiden stabilen Auflageposition bzw. -stellen nur temporär stabil, nämlich solange der Tragrahmen 6 der Transporttasche 30 durch äussere Einwirkungen verdreht wird. Die äussere Einwirkung auf die Transporttaschen 30, wie sie z. B. mittels einer Drehvorrichtung erfolgen kann, ist in den Figuren 4 und Figur 6 nicht gezeigt.

In Figur 5 ist der Aufhängehaken 19 entgegen der Uhrzeigerdrehung im Traghaken 18' verdreht und dadurch auf dem Verbindungssegment 20 in Richtung der Laufwagens 12 nach oben geschoben. Die Transporttasche 30 bzw. die obere Querstange ist dadurch um ca. 90° (Winkelgrad) zur Förderrichtung F gedreht. Die Transpottasche 30 bleibt so lange in dieser Ausrichtung bestehen, solange die externe Einwirkung auf die Transporttasche 30 ausgeübt wird. Eine Beladung der Transporttasche 30 kann nun, von rechts in Förderrichtung F betrachtet, erfolgen. Nach der Beladung der Transporttasche 30 mit einem Fördergut 32 kann die externe Einwirkung auf die Transporttasche 30 beendet werden, womit die sich wieder in die Förderstellung zurückdreht und der Traghaken 19 bzw. die Öse 4 die erste stabile Position zwischen der zweiten und dritten Position einnimmt.

In **Figur** 7 ist der Aufhängehaken 19 in Uhrzeigerdrehung im Traghaken 18' verdreht und dadurch auf dem zweiten Verbindungssegment 20.2 zwischen der ersten und dritten Position in Richtung des Laufwagens 12 nach oben geschoben. Die Transporttasche 30 bzw. die obere Querstange ist dadurch um ca. - 90° (Winkelgrad) zur Förderrichtung F gedreht. Die Transporttasche 30 bleibt so lange in dieser Ausrichtung bestehen, solange die externe Einwirkung auf die Transporttasche 30 ausgeübt wird. Eine Beladung der Transporttasche 30 kann nun, von links in Förderrichtung F betrachtet, erfolgen. Nach der Beladung der Transporttasche 30 mit einem Fördergut 32 kann die externe Einwirkung auf die Transporttasche 30 beendet werden, womit die Transporttasche 30 sich wieder in die Förderstellung in der ersten stabilen Position zurückdreht.

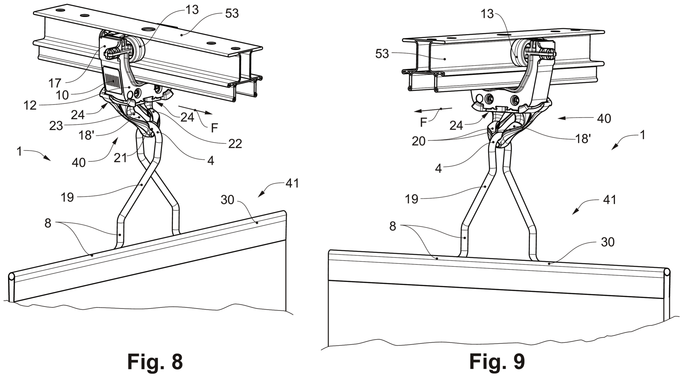

In der **Figur 8** und **Figur 9** wird eine Fördereinheit 1 in der Förderstellung gezeigt, in welcher der Aufhängehaken 19 bzw. dessen Öse 4 in der ersten Vertiefung der ersten stabilen Position angeordnet ist. Der Laufwagen 12 ist mit einem Identifikationsträger 10 in Ausgestaltung eines Barcodes ausgestattet und wird mit Hilfe einer Antriebseinrichtung über den Mitnahmebolzen 16 in Förderrichtung F bewegt. Eine Antriebeinrichtung ist in den Figuren 1 - 16 nicht gezeigt. An den Laufwagen 12 ist ein Traghaken 18' über eine Schnappverbindung 24 befestigt. In den Traghaken 18' ist der Aufhängehaken 19 zum Transportelement 41, z. B. in Form einer Transporttasche 30 vorliegend, eingesetzt. Der Aufhängehaken 19 ist am oberen Teil bzw. Ende des Tragrahmen 8 der Transporttasche 30 angeordnet und besteht aus einem drahtförmigen Material. Der obere Teil des Aufhängehakens 19 ist um 90° (Winkelgrad) zur Transporttasche 30 bzw. zur oberen Querstange verbogen und bildet am äussersten Ende ein Öse 4 aus. Die Öse 4 der Transporttasche 30 liegt in der ersten Vertiefung 11.1 der ersten Auflageposition bzw. -stelle 21. Hierdurch ist die Öse 4 längs der Förderrichtung F ausgerichtet. Da die Öse 4 um 90° (Winkelgrad) zum Tragrahmen 8 der Transporttasche 30 verdreht ist, ist die Transporttasche 30 bzw. der Tragebeutel 30 bzw. die obere Querstange senkrecht zur Förderrichtung F ausgerichtet.

Die Figur 8 zeigt die Anordnung einer Fördereinheit 1 von rechts in Förderrichtung F betrachtet und die Figur 9 zeigt die Anordnung der gleichen Fördereinheit 1 von links in Förderrichtung F betrachtet. Durch Vergleich der beiden Figuren lässt sich die Gestalt des Aufhängehakens 19 im Bereich des Traghakens 18' sehr gut erkennen. Der Traghaken 18' weist keine Vertiefungen im Bereich der zweiten und dritten Auflageposition bzw. -stelle 22, 23 auf.

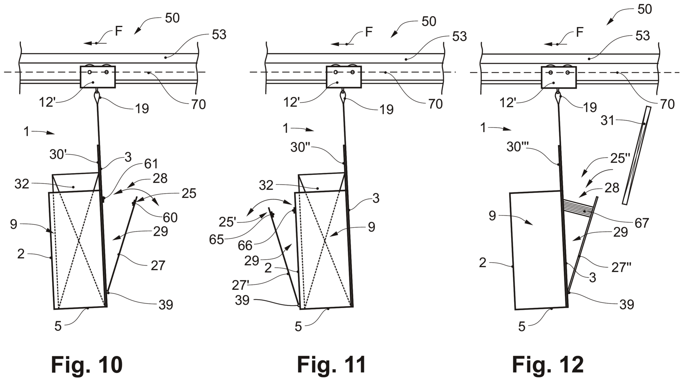

Die **Figur 10** zeigt eine Fördereinheit 1, welche aus einem Laufwagen 12' und einer Transporttasche 30' besteht. Der Laufwagen 12' läuft entlang einer Förderschiene 53 der Förderbahn 70 entlang. Der Laufwagen 12' ist schematisch dargestellt und es wird hierauf nicht weiter drauf eingegangen. Die Transporttasche 30' besteht aus einem Tragrahmen mit stabilen Seitenwände, welche vorzugsweise aus Hohlkammerplatten gefertigt sind. Die Transporttasche 30' besitzt eine vordere Taschenwand 2 in Förderrichtung F vorlaufend und eine hintere Taschenwand 3 in Förderrichtung F nachlaufend. Die Transporttasche 30' bildet ein Hauptaufnahmefach 9 zwischen der vorderen Taschenwand 2 und hinteren Taschenwand 3 aus, welches Hauptaufnahmefach 9 durch den Taschenboden 5 nach unten begrenzt ist.

An der hinteren Taschenwand 3 ist eine Klappe 27 mittels eines Taschengelenkes 39 schwenkbar befestigt. Die Klappe 27 ist aus einem stabilen Material gefertigt und besitzt an seinem freien Ende mindestens einen Permanentmagneten 60 der in Richtung dem hinteren Ende an der Klappe 27 befestigt ist. An der hinteren Taschenwand 3 ist ein Eisenblech 61 an der Aussenwand befestigt, welches mit dem Permanentmagneten 60 wechselwirken kann. Mit den beiden Elementen 60 und 61 wird eine Schliessvorrichtung 25 realisiert, die beliebig oft geöffnet und verschlossen werden kann. Wird die Klappe 27 zur hinteren Taschenwand geschwenkt, kontaktiert der Permanentmagnet 60 der Klappe 27 das Eisenblech 61 und hält die Klappe 27 an der hinteren Taschenwand 3 fest. Der Bereich zwischen der hinteren Taschenwand 3 und der Klappe 27 bildet das Nebenaufnahmefach 29 aus. Dieses Fach ist dazu geeignet ein weiteres Fördergut 32, z. Bsp. in Gestalt eines flächigen Fördergutes 31, aufzunehmen. Wird die Klappe 27 von der hinteren Taschenwand 3 leicht geöffnet, bildet sich eine Einschuböffnung 28 aus, in welche ein flächiges Fördergut eingeführt werden kann. Ein anschliessendes Schliessen der Klappe führt zu einem klemmenden Halten des flächigen Fördergutes 31 in dem Nebenaufnahmefach 29.

Die **Figur 11** zeigt eine Fördereinheit 1, welche aus einem Laufwagen 12' und einer Transporttasche 30" besteht. Der Laufwagen 12' läuft entlang einer Förderschiene 53 der Förderbahn 70 entlang. Die Transporttasche 30" besteht aus einem Tragrahmen mit stabilen Seitenwänden, welche vorzugsweise aus Hohlkammerplatten gefertigt sind. Die Transporttasche 30" besitzt eine vordere Taschenwand 2 in Förderrichtung F vorlaufend und eine hintere Taschenwand 3 in Förderrichtung F nachlaufend. Die Transporttasche 30" bildet ein Hauptaufnahmefach 9 zwischen der vorderen Taschenwand 2 und hinteren Taschenwand 3 aus, welches Hauptaufnahmefach 9 durch den Taschenboden 5 nach unten begrenzt ist.

An der vorderen Taschenwand 2 ist eine weitere Klappe 27' mittels eines Taschengelenkes 39 schwenkbar befestigt. Die Klappe 27' ist aus einem stabilen Material gefertigt und besitzt an seinem freien Ende mindestens ein erstes Klettteil 65 der in Richtung dem hinteren Ende an der Klappe 27' befestigt ist. An der vorderen Taschenwand 2 ist mindestens ein zweites Klettteil 66 an der Aussenwand befestigt, welches mit dem erstes Klettteil 65 wechselwirken kann. Mit den beiden Elementen 65 und 66 wird eine weitere Schliessvorrichtung 25' realisiert, die beliebig oft geöffnet und verschlossen werden kann. Wird die Klappe 27' zur vorderen Taschenwand 2 geschwenkt, kontaktieren sich die beiden Kletteile 65 und 66 und halten die Klappe 27 an der vorderen Taschenwand 2 fest. Der Bereich zwischen der vorderen Taschenwand 2 und der Klappe 27' bildet wiederum das Nebenaufnahmefach 29 aus. Dieses Fach ist dazu geeignet ein weiteres Fördergut 32, z. Bsp. in Gestalt eines flächigen Fördergutes 31, aufzunehmen.

Die **Figur 12** zeigt eine Fördereinheit 1, welche aus einem Laufwagen 12' und einer Transporttasche 30" besteht. Der Laufwagen 12' läuft entlang einer Förderschiene 53 der Förderbahn 70 entlang. Die Transporttasche 30"' besteht aus einem Tragrahmen mit stabilen Seitenwände, welche vorzugsweise aus Hohlkammerplatten gefertigt sind. Die Transporttasche 30'" besitzt eine vordere Taschenwand 2 in Förderrichtung F vorlaufend und eine hintere Taschenwand 3 in Förderrichtung F nachlaufend. Die Transporttasche 30"' bildet ein Hauptaufnahmefach 9 zwischen der vorderen Taschenwand 2 und hinteren Taschenwand 3 aus, welches Hauptaufnahmefach 9 durch den Taschenboden 5 nach unten begrenzt ist.

An der hinteren Taschenwand 3 ist eine weitere Klappe 27" mittels eines Taschengelenkes 39 schwenkbar befestigt. Die Klappe 27" ist aus einem stabilen Material gefertigt und besitzt an seinem freien Ende mindestens ein Gummiband 67, welches die Klappe 27" und die hintere Taschenwand 3 miteinander elastisch verbindet. Hierzu kann das Gummiband 67 an einer Seite der hinteren Taschenwand 3 befestigt sein und über die gesamte Breite der hinteren Taschenwand 3 gespannt werden, um an der anderen Seite der hinteren Taschenwand 3 wieder befestigt zu werden. Der mittlere Bereich des Gummibandes 67 überdeckt die Klappe 27" welche vom Gummiband an der hinteren Taschenwand gehalten wird. Der Bereich zwischen der hinteren Taschenwand 3 und der Klappe 27" bildet wiederum das Nebenaufnahmefach 29 aus. Dieses Fach ist dazu geeignet ein flächigen Fördergutes 31, aufzunehmen. Wird die Klappe 27" von der hinteren Taschenwand 3 leicht geöffnet, spannt sich das Gummiband 67 und es bildet sich eine Einschuböffnung 28 aus, in welche ein flächiges Fördergut 31 in die Nebenaufnahmefach 29 eingeführt werden kann. Ein anschliessendes Schliessen der Klappe führt zu einem klemmenden Halten des flächigen Fördergutes 31 in dem Nebenaufnahmefach 29.

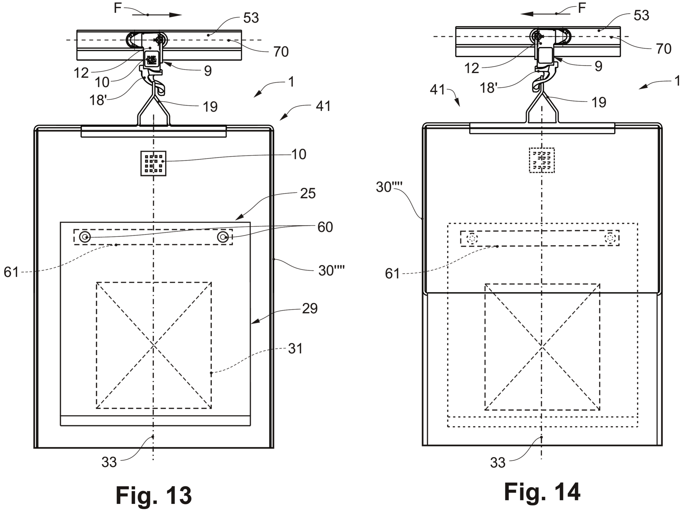

**Figur 13** und **Figur 14** zeigt eine Fördereinheit 1 einmal von rechts und einmal von links in Fördervorrichtung F betrachtet. Die Fördereinheit 1 besteht aus einem Laufwagen 12 mit einem Identifikationsträger 10 in Ausgestaltung eines QR-Codes, der entlang der Förderschiene 53 bewegt wird. Am Laufwagen 12 ist ein Traghaken 18' befestigt, der mit dem Aufhängehaken 19 der Transporttasche 30'''' interagiert. Die Transporttasche 30'''' ist in Förderrichtung F betrachtet in Uhrzeigerrichtung um 90° (Winkelgrad) gedreht, so dass der Aufhängehaken 19 der Transporttasche 30"" sich im Traghaken 18' in der dritten Auflageposition bzw. -stelle befindet. Durch äussere Einwirkungen, hier nicht gezeigt, verdreht sich die Transporttasche 30'''' und wird durch diese äusseren Einwirkungen in dieser Position gehalten, bis die äusseren Einwirkungen aufhören und die Transporttasche 30'''' wieder in ihre Förderposition, also quer zur Förderrichtung F, zurück gleitet. Die äussere Einwirkung erfolgt insbesondere durch eine Drehvorrichtung.

In den Figuren 13 und 14 ist die Transporttasche 30"" mit einem Identifikationsträger 10 in Ausgestaltung eines QR-Codes versehen und besitzt eine Schliessvorrichtung 25, wie in der Figur 10 schon erläutert. Die beiden Permanentmagnete 60 an der Klappe 27 wirken mit dem Eisenblech 61 der hinteren Taschenwand 3 zusammen. In dem Nebenaufnahmefach 29 ist ein flächiges Fördergut 31 klemmend gehalten. In dem Hauptaufnahmefach 9 der Transporttasche 30 ist kein weiteres Fördergut eingebracht. Allgemein kann festgehalten werden, dass alle Aufnahmefächer einer Transporttasche 30 mit Fördergütern 32, 31 befüllt sein können. In Figur 14 wird sie Vorderseite der Transporttasche 30'''' von Figur 13 gezeigt.

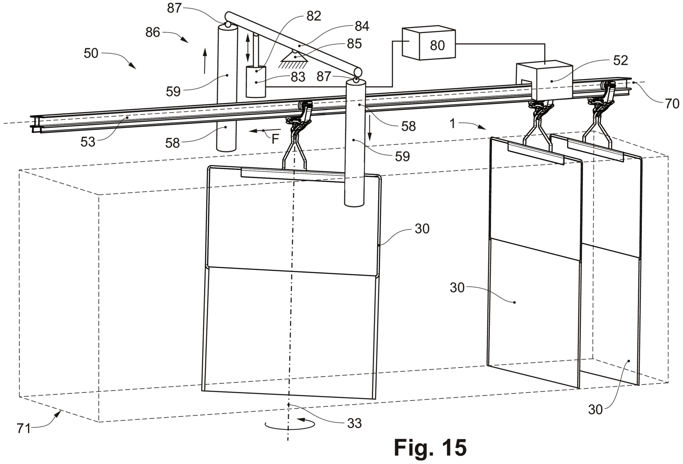

Die **Figur 15** zeigt eine Drehvorrichtung 86 einer Förderanlage bzw. eines Fördersystems 50 in einer perspektivischen Ansicht zum Drehen der Transporttaschen 30 und gegebenenfalls auch zum temporären Halten der Transporttaschen 30 in der zweiten oder dritten Position.

Entlang einer Lauf- bzw. Förderschiene 53 sind hintereinander eine Stopp- und Freigabevorrichtung 52 und eine Drehvorrichtung 86 für Fördereinheiten 1 dargestellt. An er Stopp- und Freigabevorrichtung 52 werden die Fördereinheiten 1 angehalten und nacheinander freigegeben. Nach der Freigabe wird die Fördereinheit 1 angetrieben weiterbewegt. Der Antrieb der Fördereinheiten 1 ist nicht gezeigt. Die Fördereinheiten 1 bewegen sich in Förderrichtung F auf die Drehvorrichtung 86 zu. Die Drehvorrichtung 86 funktioniert ähnlich wie eine Wippe. An einem fixierten Schwenklager 85 ist ein Schwenkhebel 84 mittig schwenkbar beweglich angeordnet. Der Schwenkhebel 84 kann mittels eines Stellmittels 82 in Form eines Pneumatik Zylinders 83 quer zur Förderrichtung F geschwenkt werden. Hierbei bewegt sich ein Ende des Schwenkhebels 84 aufwärts und das andere Ende des Schwenkhebels 84 abwärts, oder umgekehrt. An den Enden des Schwenkhebels 84 sind Gelenkverbindungen 87 angeordnet, an denen Einwirkelemente 58 angebracht sind. Beim Schwenken des Schwenkhebels 84 werden die Einwirkelemente 58 im Gleichtakt wie die Enden des Schenkhebels 84 aufwärts bzw. abwärts bewegt. Die Einwirkelemente 58 haben in diesem Fall die Form von Stäben 59. Sie können aber auch eine andere Form aufweisen. Die Einwirkelemente 58 können aber auch geführt bewegt werden. Ist eine Linearführung, hier nicht gezeigt, für die Einwirkelemente 58 vorgesehen, ist es vorteilhaft, wenn die Gelenkverbindung 87 als Doppelgelenk ausgeführt wird. Durch das wippenartige Verhalten der Drehvorrichtung 86 kann jeweils ein Einwirkelement 58 in den Förderkorridor 71 hineinbewegt werden, in denen die Transporttaschen 30 der Fördereinheiten 1 sich entlang bewegen.

Wird die Transporttasche 30 an der Drehvorrichtung 86 vorbeibewegt, berührt die Transporttasche 30 eines der Einwirkelemente 58, was zu einer Drehung der Transporttasche 30 um ihre Vertikale 33 führt. Je nachdem welches der beiden Einwirkelemente 58 in den Förderkorridor 71 der Transporttaschen 30 eingetaucht ist, dreht sich die Transporttasche 30 in Uhrzeigerrichtung oder entgegen der Uhrzeigerrichtung um ihre Vertikale 33. Die Steuerungsvorrichtung 80 steuert die Stopp- und Freigabevorrichtung 52 und die Drehvorrichtung 86 in der Weise, dass Fördereinheiten 1 zur rechten Zeit freigegeben werden und die Transporttasche 30 der Fördereinheiten 1 zur richtigen Seite gedreht wird, um eine notwendige Operation, wie Übergabe von Fördergütern, an der Transporttasche 30 durchführen zu können.

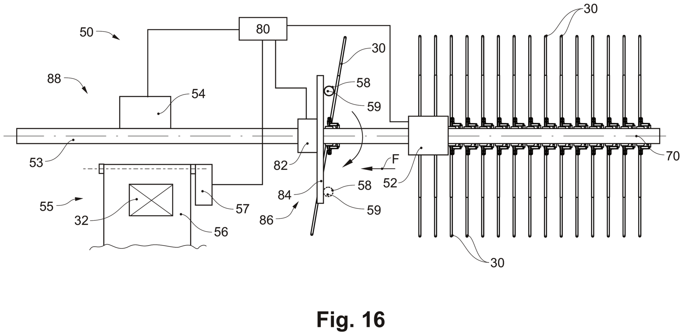

**Figur 16** zeigt eine Drehvorrichtung 86 einer Förderanlage bzw. eines Fördersystems 50 in einer Draufsicht von oben. Entlang einer Lauf- bzw. Förderschiene 53 sind hintereinander eine Stopp- und Freigabevorrichtung 52, eine Drehvorrichtung 86 und eine Beladestation 88 für Fördereinheiten 1 dargestellt. An einer Stopp- und Freigabevorrichtung 52 werden die Fördereinheiten 1 angehalten und nacheinander freigegeben. Nach der Freigabe wird die Fördereinheit 1 angetrieben weiterbewegt und zur Drehvorrichtung 86 geführt. Die Drehvorrichtung 86 wird mittels des Stellmittels 82 so eingestellt, dass die Transporttasche 30 der Fördereinheit 1 in der Weise gedreht wird, dass die Transporttasche 30 für die Beladung richtige ausgerichtet ist. Die Transporttasche kann von der vorderen Taschenwand 2 befüllt werden, oder aber von der anderen Seite, also der hinteren Taschenwand 3 der Transporttasche 30 befüllt werden.

Allgemein können auch andere Aufnahmefächer oder alle Aufnahmefächer mit Fördergüter 32 befüllt werden.

Die Fördereinheit 1 wird nun mit der gedrehten Transporttasche 30 entlang der Förderbahn 70 weiter gefördert bis zu der Beladevorrichtung bzw. -station 88. In der Beladevorrichtung bzw. -station 88 wird die gedreht gehaltene Transporttasche 30 mit Hilfe einer Öffnungsvorrichtung 54 geöffnet. In die geöffnete Transporttasche 30 wird mit Hilfe einer Zuführeinrichtung 55 ein Fördergut 32 übergeben. Die Zuführeinrichtung 55 weist ein Förderband 56 auf, welches mittels einer Antriebseinheit 57 bewegt werden kann und damit das Fördergut 32 in die offene Transporttasche 30 hineinfördert. Die Öffnungsvorrichtung 54 und die Antriebseinheit 57 der Zuführvorrichtung 55 werden durch die Steuerungsvorrichtung 80 so angesteuert, dass die Abläufe harmonisch und aufeinander abgestimmt durchgeführt werden können.

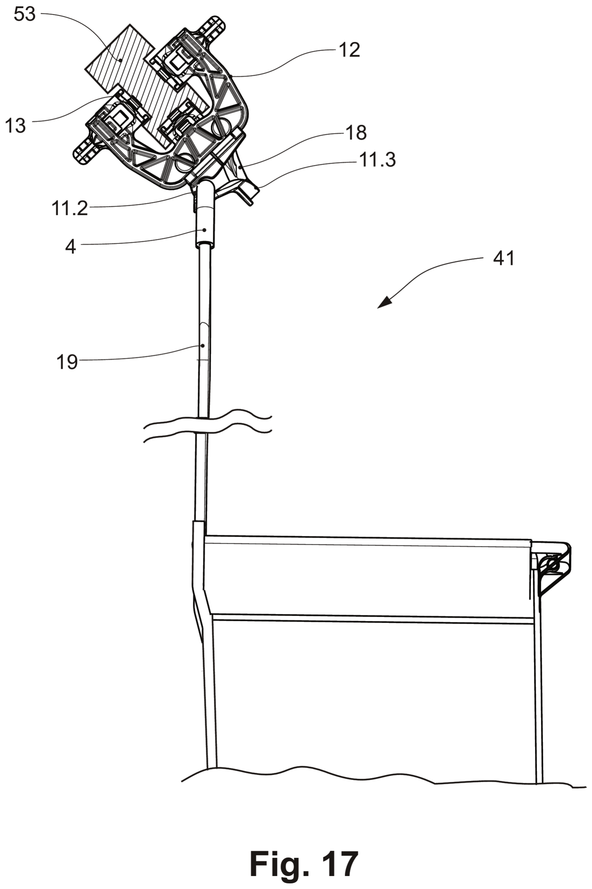

Gemäss einer besonderen Ausführungsform eines Fördersystems ist der Laufwagen 53 und mit diesem der Traghaken 18 gemäss der **Figur 17** in einer Belade- oder Entladestellung in einer senkrecht zur Förderrichtung F liegenden Ebene geneigt. Dies geschieht hier durch das Neigen der Förderschiene 53 in der besagten Ebene. Das Neigen der Förderschiene 53 wird z. B. durch ein Tordieren bzw. Verdrehen der Förderschiene 53 um ihre Längsachse erreicht.

Der gezeigte Traghaken 18 gemäss Figur 17 umfasst lediglich eine zweite und dritte Auflageposition bzw. -stelle 11.2, 11.3. Allerdings ist bei dieser Ausführungsform auch ein Traghaken mit einer ersten, zweiten und dritten Auflageposition bzw. stelle 11.1, 11.2, 11.3 einsetzbar, wie er z. B. in den Figuren 2 und 3 gezeigt ist. Nachfolgend wird die Ausführungsform nach Figur 17 anhand eines Traghakens 18 gemäss den Figuren 2 und 3 beschrieben.

Während in der Förderstellung eine senkrecht zu den Drehachsen der Tragrollen 13 angeordnete Laufwagenebene vertikal ausgerichtet ist, wie in den Figur 8 und Figur 9 gezeigt, bildet diese Laufwagenebene in der geneigten bzw. gekippten Position des Laufwagens 12 zur Vertikalen einen spitzen Winkel aus.

Durch das Neigen bzw. Kippen des Traghakens 18 wird die ersten Auflageposition bzw. -stelle 11.1, hier als Vertiefung ausgebildet, je nach Neigungsrichtung gegenüber der zweiten oder dritten Auflageposition bzw. -stelle, hier ebenfalls als Vertiefungen ausgebildet, auf ein höheres Niveau potenzieller Energie gehoben. Die zweite oder dritte Auflageposition bzw. -stelle kann sogar - je nach Neigungsrichtung - das tiefste potenzielle Energieniveau aufweisen.

Dadurch rutscht der Aufhängehaken 19 bzw. dessen Öse 4 schwerkraftbedingt und insbesondere selbsttätig - je nach Neigungsrichtung - in die zweite oder dritte Auflageposition bzw. -stelle 11.2, 11.3 des Traghakens 18 bzw. in die dazugehörige Vertiefung in eine Be- oder Entladestellung.

Durch Aufheben der Neigung des Laufwagens 12 und entsprechend auch des Traghakens 18 nimmt dieser wieder die Förderstellung ein. Entsprechend bildet die erste Auflageposition bzw. -stelle 11.1 gegenüber der zweiten und dritten Auflageposition bzw. -stelle 11.2, 11.3 das tiefste Niveau potenzieller Energie aus, so dass der Aufhängehaken 19 bzw. dessen Öse 4 schwerkraftbedingt und insbesondere selbsttätig wieder in die erste Auflageposition bzw. -stelle in seine Förderstellung zurückrutscht bzw. -gleitet.

Rutschen bzw. Gleiten die Aufhängehaken 19 der Fördereinheiten in Abhängigkeit von der Neigung selbsttätig zwischen der ersten und zweiten 11.1, 11.2 bzw. der ersten und dritten Auflageposition bzw. -stelle 11.2, 11.3 hin und her, so kann auf eine Drehvorrichtung nach Figur 15 und 16 verzichtet werden.

Allerdings kann zum Verschieben des Aufhängehakens 19 zwischen der ersten, zweiten und dritten Auflageposition bzw. -stelle auch eine Drehvorrichtung notwendig sein. Die Neigung des Traghakens 18 erleichtert aber das Bewegen des Aufhängehaken von der ersten in die zweite bzw. dritte Auflageposition bzw. -stelle 11.2, 11.3, da Letztere in der entsprechenden Neigestellung gegenüber der neigungsfreien Förderstellung ein tieferes Niveau an potenzieller Energie aufweist.

Mit Einnahme der zweiten oder dritten Auflageposition bzw. -stelle 11.2, 11.3 durch den Aufhängehaken 19 wird das Transportelement 41 - hier eine Transportgestell -, wie bereits weiter oben ausführlich beschrieben, um eine vertikale Achse zur Seite in eine Belade- oder Entladestellung gedreht. Die Drehung beträgt im vorliegenden Ausführungsbeispiel 90°.

Mit Einnahme der ersten Auflageposition bzw. -stelle 11.1 durch den Aufhängehaken 19 wird das Transportelement 41 wieder um die vertikale Achse in die Förderstellung zurückgeschwenkt, in welcher dieses insbesondere mit einer vorlaufenden Transportelementwand frontal zur Förderrichtung F ausgerichtet ist.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. **Fördereinheit** (1) zum hängenden Transport von Fördergüter (32) aufnehmenden Transportelementen (41) in einem Fördersystem (50), insbesondere einem schienengeführten Fördersystem (50) oder einem Förderkettensystem, mit:
- einem an einem Förderelement (40), insbesondere einem Laufwagen (12) oder einem Förderkettenglied, angebrachten Traghaken (18),
- einem Transportelement (41), und
- einem am Transportelement (41) angebrachten Aufhängehaken (19), wobei der Aufhängehaken (19) im Traghaken (18) hängend gelagert ist,
**dadurch gekennzeichnet, dass**
der Traghaken (18) derart ausgestaltet ist, dass der Aufhängehaken (19) im Traghaken (18) mindestens drei stabile Positionen einnehmen kann, wobei der Aufhängehaken (19) in einer ersten stabilen Position gegenüber dem Aufhängehaken (19) in einer zweiten stabilen Position um einen Winkel gedreht ist, und wobei der Aufhängehaken (19) in der ersten stabilen Position gegenüber dem Aufhängehaken (19) in einer dritten stabilen Position um einen anderen Winkel als in der zweiten stabilen Position gedreht ist.

2. Fördereinheit (1) nach Anspruch 1, **dadurch gekennzeichnet, dass** der Aufhängehaken (19) derart zwischen der ersten stabilen Position und der zweiten stabilen Position und der dritten stabilen Position hin und her überführbar ist, dass der Aufhängehaken (19) konstant auf dem Traghaken aufliegt.

3. Fördereinheit (1) nach Anspruch 1 oder 2, **dadurch gekennzeichnet, dass** der Traghaken (18) eine erste Auflageposition bzw. -stelle (21), eine zweite Auflageposition bzw. -stelle (22) und eine dritte Auflageposition (23) bzw. - stelle aufweist, und der Aufhängehaken (19) in der ersten stabilen Position auf der ersten Auflageposition bzw. -stelle (21) aufliegt, in der zweiten stabilen Position auf der zweiten Auflageposition bzw. -stelle (22) aufliegt und in der dritten stabilen Position auf der dritten Auflageposition bzw. stelle (23) aufliegt, und zwischen der ersten Auflageposition bzw. -stelle (21) und der zweiten Auflageposition bzw. -stelle (22) und der dritten Auflageposition (23) bzw. - stelle je ein Verbindungssegment (20) angeordnet ist, auf dem der Aufhängehaken (19) gleitend zwischen der ersten stabilen Position, der zweiten stabilen Position und der dritten stabilen Position hin und her überführbar ist.

4. Fördereinheit (1) nach Anspruch 3, **dadurch gekennzeichnet, dass** der Traghaken (18) derart ausgestaltet ist, dass in einer bestimmten ersten räumlichen Orientierung bzw. Anordnung der ersten Auflageposition bzw. -stelle (21) des Traghakens (18) der Aufhängehaken (19) auf der ersten Auflageposition bzw. - stelle (21) die erste stabile Position einnehmen kann, in welcher der Aufhängehaken (19) in einer ersten Ebene ausgerichtet ist, und in einer von der bestimmten ersten räumlichen Orientierung bzw. Anordnung verschiedenen zweiten räumlichen Orientierung bzw. Anordnung der zweiten Auflageposition bzw. -stelle (22) des Traghakens (18) der Aufhängehaken (19) auf der zweiten Auflageposition bzw. -stelle (22) die zweite stabile Position einnehmen kann, in welcher der Aufhängehaken (19) in einer zweiten Ebene ausgerichtet ist, und in einer von der bestimmten zweiten räumlichen Orientierung bzw. Anordnung verschiedenen dritten räumlichen Orientierung bzw. Anordnung der dritten Auflageposition bzw. -stelle (23) des Traghakens (18) der Aufhängehaken (19) auf der dritten Auflageposition bzw. -stelle (23) die dritte stabile Position einnehmen kann, in welcher der Aufhängehaken (19) in einer dritten oder ebenfalls in der zweiten Ebene ausgerichtet ist.

5. Fördereinheit (1) nach Anspruch 4, **dadurch gekennzeichnet, dass** in einer bestimmten ersten räumlichen Orientierung bzw. Anordnung der ersten Auflageposition bzw. -stelle des Traghakens (18) die erste Position einem Minimum der potenziellen Energie des hängend gelagerten Transportelements (41) entspricht, und durch Drehen des Aufhängehakens (19) um einen bestimmten Drehwinkel der Aufhängehakens (19) zwischen der ersten Position und der zweiten Position oder der dritten Position am Traghaken (18) hin und her überführbar ist.

6. Fördereinheit (1) nach einem der Ansprüche 1 bis 5, **dadurch gekennzeichnet, dass** durch Drehen des Aufhängehakens (19) bzw. durch Drehen des Transportelementes (41) um eine Vertikale (33) der Förderrichtung (F) der Aufhängehaken (19) zwischen der ersten stabilen Position und der zweiten stabilen Position und der dritten stabilen Position hin und her überführbar ist.

7. Fördereinheit (1) nach einem der Ansprüche 1 bis 6, **dadurch gekennzeichnet, dass** das Transportelement (41) ein Behälter, insbesondere mit mindestens einer flexiblen Wand, insbesondere einer flexiblen Gewebewand ist.

8. Fördereinheit (1) nach einem der Ansprüche 1 bis 7, **dadurch gekennzeichnet, dass** das Transportelement (41) eine Transporttasche (30) ist, und die Transporttasche (30) insbesondere eine hintere Taschenwand (3) und eine vordere Taschenwand (2) umfasst, die über einen Taschenboden (5) derart flexibel miteinander verbunden sind, dass sie zwischen einem ersten Zustand, in welcher sie ein oben offenes und von oben befüllbares Aufnahmefach (9) bildet, und einem zweiten Zustand, in welcher sie dicht nebeneinander liegen und eine zusammengefaltete Transporttasche (30) bilden, hin und her bewegbar sind, wobei die hintere Taschenwand (3) nach oben über die Höhe der Vorderwand (2) hinaus mit dem Aufhängehaken (19) zum Befestigen der Transporttasche (30) an der Fördereinheit (1) verlängert ist, und wobei der Aufhängehaken (19) an einem oberen Ende eines Tragrahmens (8) angebracht ist.

9. **Drehvorrichtung** (86), ausgebildet zum Drehen der Transportelemente (41) von Fördereinheiten (1) nach einem der Ansprüche 1 bis 8, in einem Fördersystem (50), insbesondere in einem durch Förderschienen (53) geführtes Fördersystem (50) oder in einem Förderkettensystem, zum hängenden Fördern von Fördergütern (32) entlang eines Förderkorridors (71), wobei die Transportelemente (41) drehbar um ihre vertikale Achse sind,
**dadurch gekennzeichnet, dass**
die Drehvorrichtung (86) mindestens ein schaltbares Einwirkelement (58) enthält, welches so in den Förderkorridor (71) der Transportelemente (41) einbringbar ist und in der Folge auf die Transportelemente (41) einwirken kann, dass sich die Transportelemente (41) beim Fördern um ihre vertikale Achse (33) nach rechts oder nach links drehen.

10. Drehvorrichtung (86) nach Anspruch 9, **dadurch gekennzeichnet, dass** das wenigstens eine schaltbare Einwirkelement (58) ausserhalb des Förderkorridors (71) angeordnet ist.

11. Drehvorrichtung (86) nach einem der Ansprüche 9 bis 10, **gekennzeichnet durch** zwei Einwirkelemente (58), welche insbesondere durch ein Antriebselement (57) wechselseitig schaltbar sind.

12. Drehvorrichtung (86) nach Anspruch 9 bis 11, **dadurch gekennzeichnet, dass** die zwei Einwirkelemente (58) wechselseitig im Bereich der Transportelemente (41), insbesondere im Bereich des Tragrahmens (8) der Transportelemente (41), in den Förderkorridor (71) der Transportelemente (41) einbringbar sind.

13. **Verfahren** zum Beladen von Fördereinheiten (1) nach einem der Ansprüche 1 bis 8 mit Fördergütern (32) an einer Beladevorrichtung bzw. -station (88), wobei die Beladung mit den Fördergütern (32) quer zum Förderkorridor (71) der Transportelemente (41) erfolgt, und wobei die Transportelemente (41) vor dem Beladen an der Beladevorrichtung bzw. -station (88) mit der Drehvorrichtung (86) nach einem der Ansprüchen 9 bis 12 um ihre vertikale Achse (33) in die zum Beladen vorgesehene Ausrichtung gedreht werden.

14. **Verfahren** zum Entladen von Fördergütern (32) aus Fördereinheiten (1) nach einem der Ansprüche 1 bis 8 an einer Entladevorrichtung bzw. -station, wobei die Entladung der Fördergüter (32) quer zur oder in Förderrichtung (F) des Förderelementes (40) erfolgt, und wobei die Transportelemente (41) vor dem Entladen an der Entladevorrichtung bzw. -station mit einer Drehvorrichtung (86) nach einem der Ansprüche 9 bis 12 um ihre vertikale Achse (33) in die zum Entladen vorgesehene Ausrichtung gedreht werden.

15. **Fördersystem** (50) zum geführten, hängenden Transport von Transportelementen (41), insbesondere Transporttaschen (30), entlang eines Förderwegs bzw. -bahn (70), insbesondere ein schienengeführtes Fördersystem (50) oder ein Förderkettensystem, mit mindestens einer Fördereinheit (1) nach einem der Ansprüche 1 bis 8.

16. Fördersystem nach Anspruch 15, **dadurch gekennzeichnet, dass** das Fördersystem (50) so ausgebildet ist, dass der Traghaken (18) in einer Belade- oder Entladestellung gegenüber einer Förderstellung in einer senkrecht zur Förderrichtung (F) angeordneten Ebene geneigt ist, derart dass der Aufhängehaken (19) in Abhängigkeit von der Neigungsrichtung auf der zweiten Auflageposition bzw. -stelle die zweite stabile Position oder auf der dritten Auflageposition bzw. - stelle die dritte stabile Position einnehmen kann.

17. **Transporttasche** (30) für Fördereinheiten (1) nach einem der Ansprüche 1 bis 8, insbesondere für ein Fördersystem (50), wie ein schienengeführtes Fördersystem (50) oder ein Förderkettensystem, zum hängenden Fördern von Fördergütern (32) entlang einer Förderbahn (70) bzw. Förderschiene (53), wobei der obere Teil eines Tragrahmens (8) der Transporttasche (30) einen Aufhängehaken (19) mit einem oberen Abschnitt, wie Öse (4), ausbildet,
**dadurch gekennzeichnet, dass**
der obere Abschnitt, wie Öse (4), des Aufhängehakens (19) in einem Winkel, insbesondere rechtwinklig, gegenüber einem unteren Abschnitt des Aufhängehakens (19) oder gegenüber dem Tragrahmen (8) bzw. einer Rückwand der Transporttasche (30) verdreht bzw. ausgerichtet ist.
